# EUROPEAN PATENT APPLICATION

(11) **EP 4 818 642 A1**
(43) Date of publication of application: **07.10.2026**
(21) Application number: 24906285.2
(22) Date of filing: 16.12.2024
(51) Int. Cl.: G01C 21/00

(54) **NAVIGATION METHOD AND APPARATUS**

(30) Priority: 19.12.2023 CN 202311762546
(71) Applicant: Huawei Technologies Co., Ltd., Shenzhen, Guangdong 518129 (CN)
(72) Inventor: DING, Ran, Shenzhen, Guangdong 518129 (CN); HOU, Qian, Shenzhen, Guangdong 518129 (CN); ZHANG, Peng, Shenzhen, Guangdong 518129 (CN); DONG, Zhiwei, Shenzhen, Guangdong 518129 (CN); WANG, Jiaxiang, Shenzhen, Guangdong 518129 (CN); GAO, Yunpeng, Shenzhen, Guangdong 518129 (CN)
(74) Representative: MERH-IP Matias Erny Reichl Hoffmann Patentanwälte PartG mbB
(86) International application number: PCT/CN2024/139519
(87) International publication number: WO 2025/130804

(57) **Abstract**

Embodiments of this application provide a navigation method and apparatus, to provide lane-level navigation guidance, so as to provide more accurate navigation guidance and improve accuracy of vehicle traveling. The method includes: first, obtaining navigation data and lane sensing data, where the navigation data includes a navigation path on which the vehicle travels on a map and may include a path generated based on a traveling start point and a destination of the vehicle, and the lane sensing data includes information about at least one lane that is obtained based on information collected in an environment in which the vehicle is located and may specifically include information about at least one lane that is determined from environment sensing data collected by a sensor in the vehicle; and then, generating navigation guidance based on the navigation data and the lane sensing data, and displaying the navigation guidance, where the navigation guidance may be used to identify a drivable lane corresponding to the navigation path in the environment, and the drivable lane includes a drivable path of the vehicle obtained based on the lane sensing data.

## Description

This application claims priority to Chinese Patent Application No. 202311762546.6, filed with the China National Intellectual Property Administration on December 19, 2023 and entitled "NAVIGATION METHOD AND APPARATUS", which is incorporated herein by reference in its entirety.

### TECHNICAL FIELD

This application relates to the field of vehicles, and in particular, to a navigation method and apparatus.

### BACKGROUND

With rapid development of cities, there are more lanes and road types are more complex. There is little change in a full-scenario navigation software interface, and consequently, especially in a complex road scenario, it is increasingly difficult for a user to use map navigation data to compare with the real world, and it is easy to take a wrong intersection or miss a lane change opportunity.

From a data side, a high definition (high definition, HD) map has rich information, and is highly similar to the real world. However, there are high construction costs and high policy constraint, and it is difficult to ensure freshness. High-precision guidance data cannot be provided in an urban region, and a high-level navigation guidance requirement of the user cannot be met.

Therefore, how to provide navigation guidance with higher precision for the user becomes an urgent problem to be resolved.

### SUMMARY

This application provides a navigation method and apparatus, to provide lane-level navigation guidance, so as to provide more accurate navigation guidance and improve accuracy of vehicle navigation.

In view of this, according to a first aspect, this application provides a navigation method, including: first, obtaining navigation data and lane sensing data, where the navigation data includes a navigation path of a vehicle when the vehicle travels in a map and may include a path generated based on a traveling start point and a destination of the vehicle, and the lane sensing data includes information about at least one lane that is determined based on information collected in an environment in which the vehicle is located and may specifically include information determined based on environment sensing data collected by a sensor in the vehicle; and then, generating navigation guidance based on the navigation data and the lane sensing data, and displaying the navigation guidance, where the navigation guidance is used to provide guidance for the vehicle to travel along the navigation path, the navigation guidance may be used to identify a drivable lane corresponding to the navigation path in the environment, the corresponding drivable lane in the environment includes a traveling path of the vehicle that is obtained based on the lane sensing data, and the path may be a lane that can be actually traveled by the vehicle and on which a lane line or no lane line is drawn.

In an implementation of this application, lane-level navigation guidance may be generated in an environment sensing manner, to provide more accurate navigation guidance. In addition, in the method provided in this application, the lane in the environment is sensed and the guidance is generated. Therefore, lane-level guidance with higher precision can be implemented without depending on a high definition map. For example, in some scenarios in which a lane line on a map is not clear or there is no lane line, a drivable path of the vehicle may be identified in an environment sensing manner, to provide more accurate navigation guidance, and improve traveling accuracy and safety of the vehicle.

In a possible implementation, the method may further include: determining the lane sensing data through sensing based on data collected by the sensor of the vehicle. For example, the lane information may be determined based on a lane line included in the lane sensing data, or a lane sensing data may be obtained through an output after the lane sensing data is used as an input for a pre-trained lane sensing model. The lane sensing data may specifically include the information about the at least one lane in the environment in which the vehicle is located, and may specifically include information like a lane line, lane positioning, or a lane quantity of the at least one lane. The at least one lane may specifically include a lane on which the vehicle currently travels, a lane adjacent to the vehicle, or a lane in front of the vehicle. Therefore, in the method provided in this embodiment of this application, the information about the lane in the environment in which the vehicle is located may be obtained based on sensing of the environment in which the vehicle is located.

In a possible implementation, the lane sensing data may specifically include data collected by the sensor in the vehicle. For example, the sensor may include but is not limited to an image sensor, a radar, an infrared sensor, or a depth sensor. In other words, the lane sensing data may be but is not limited to data of an environment sensed by the sensor, for example, the image sensor, the radar, the infrared sensor, or the depth sensor. Therefore, in this implementation of this application, the data obtained through sensing by the sensor may be used to sense a specific status of the environment in which the vehicle is located, so that lane-level navigation guidance is determined based on a sensing result, without depending on an HD map.

In a possible implementation, the navigation data may specifically include map data and a navigation path. The map data is data of a map of a vehicle traveling region, and the navigation path is a path planned by the vehicle for traveling in a region corresponding to the map. The navigation data may be specifically generated based on a user trigger, or may be generated based on an autonomous driving function of the vehicle, or the like. This may be specifically determined based on an actual application scenario.

In a possible implementation, the generating the navigation guidance based on the navigation data and the lane sensing data may include: using the map data and historical motion information of the vehicle as inputs for a pre-trained prediction model, and outputting a predicted path of the vehicle, where the prediction model is configured to output the predicted path of the vehicle based on the input data, and the historical motion information of the vehicle may include information generated when the vehicle moves in a historical time period, for example, information like a speed, an acceleration, an angle, and an angular velocity of the vehicle; and generating the navigation guidance based on the predicted path, the navigation path, and the lane sensing data.

In this implementation of this application, the pre-trained prediction model may be used to predict the traveling path of the vehicle, so that the navigation guidance that better matches the traveling path of the vehicle may be generated based on the predicted path of the vehicle. This improves navigation accuracy of traveling the vehicle.

In a possible implementation, the generating the navigation guidance based on the predicted path, the navigation path, and the lane sensing data may include: if the navigation path in the navigation data includes a path on which the vehicle changes a lane for traveling, for example, in a situation like an intersection turning or a straight-through lane change, obtaining a first path and a second path of the navigation path, where the first path is a path on which the vehicle enters a target lane from a current lane, for example, when the vehicle needs to turn, the first path may be a traveling path of the vehicle on the navigation path when the vehicle enters a curve, or when the vehicle needs to change a lane, the first path may be a traveling path of the vehicle when the vehicle transfers from the current lane to the target lane, and the target lane is one of the at least one lane; and the second path includes a traveling path planned for the vehicle after the vehicle travels to the target lane, for example, when the vehicle needs to turn, the second path is a traveling path of the vehicle on the navigation path when the vehicle travels out of the curve, or when the vehicle needs to change a lane, the second path may be a traveling path of the vehicle after the vehicle transfers from the current lane to the target lane, and the target lane is a lane on which the vehicle needs to turn or change the lane; determining a plurality of trajectory points based on the predicted path, the first path, and the second path, where the plurality of trajectory points may include points that may be passed by the vehicle during traveling, and the predicted path may be used to bind the first path and the second path in the navigation path, for example, the predicted path is fused into the first path and the second path, so that when the trajectory points are subsequently determined, navigation points that are more suitable for a real scenario may be calculated as the trajectory points; and the plurality of trajectory points may include a curve entry trajectory point and a curve exit trajectory point, the curve entry trajectory point is a point determined based on the first path, and the curve exit trajectory point includes a point determined based on the second path, to facilitate navigation guidance for the vehicle entering and exiting a curve; and generating the navigation guidance based on the plurality of trajectory points.

In this implementation of this application, the navigation guidance may be generated by using the trajectory points that may be passed by the vehicle, to generate more accurate navigation guidance based on the trajectory points that may be passed by the vehicle.

In a possible implementation, the generating the navigation guidance based on the plurality of trajectory points may include: fitting the plurality of trajectory points, to generate a turning guidance curve, where the turning guidance curve indicates a lane on which the vehicle travels in the environment, and a curve model is a model of fitting a curve from the plurality of points; and generating the navigation guidance based on the turning guidance curve.

Therefore, in this implementation of this application, a smoother guidance line may be generated through fitting, to improve user experience of viewing the navigation guidance and improve accuracy of identifying the navigation guidance by a user.

Optionally, when fitting the turning guidance curve, the curve model may be used to obtain the smoother guidance line through fitting, to improve visual experience of the user.

Optionally, when the plurality of trajectory points are determined, sampling may be performed from the plurality of initially determined trajectory points, to obtain a plurality of trajectory points that better adapt to an actual traveling path of the vehicle, and then the plurality of sampling points are fitted, to generate the turning guidance curve. Therefore, in this implementation of this application, trajectory point sampling may be used to avoid generating an unreachable curve.

In a possible implementation, when the vehicle turns, the fitting the plurality of trajectory points, to generate the turning guidance curve may include: obtaining a polyline point set, where the polyline point set may include a current position of the vehicle, a point on an untraveled path in the predicted path, and a trajectory point that is in the plurality of trajectory points and that is not reached by the vehicle, and a polyline is formed between the plurality of trajectory points; and fitting the polyline point set based on the curve model, to generate the turning guidance curve, where fitting may be performed on different types of trajectory points, to generate a curve with a more accurate direction.

In a possible implementation, the fitting the plurality of trajectory points based on the curve model, to generate the turning guidance curve further includes: when the vehicle travels to the curve entry point, fitting trajectory points on the first path, to generate the turning guidance curve pointing to the curve exit trajectory point; and when the vehicle travels to the curve exit point, fitting trajectory points on the second path, to generate the turning guidance curve pointing from the vehicle to an end of the predicted path. Therefore, according to the method provided in this application, more fine-grained guidance is provided for both curve entry and curve exit based on the trajectory points, to provide navigation guidance with higher accuracy.

In a possible implementation, the prediction model may specifically include:
a map encoder, configured to extract a feature from the map data to obtain a map feature;
a motion encoder, configured to extract a feature from the historical motion information of the vehicle, to obtain a motion feature;
a fusion encoder, configured to extract a feature from the map feature and the motion feature, to obtain a global feature;
a reference path generator, configured to generate a reference path of the vehicle based on a previous frame of predicted path; and
a path decoder, configured to generate the predicted path based on the global feature and the reference path.

Therefore, in this implementation of this application, the prediction model may be used to extract features from a plurality of dimensions, to obtain the accurate predicted path.

In a possible implementation, the prediction model may further include:
a vision encoder, configured to extract features from input lane sensing data (for example, information obtained through sensing from the environment, like an image or a point cloud), to obtain a vision feature; and
a path decoder, further configured to generate the predicted path based on the vision feature, the global feature, and the path feature.

Therefore, in this implementation of this application, path prediction accuracy is further improved by using the visual encoder in combination with the environment sensing information.

In a possible implementation, the reference path generator is further configured to obtain a reference path, that is, a drivable path of the vehicle, based on the previous frame of predicted path and a motion constraint path. The motion constraint path is a path generated based on a physical motion model of vehicle traveling. The motion constraint path is used as constraint for outputting the reference path. The previous frame of predicted path is a path output by the prediction model when navigation guidance is generated or updated last time. The reference path is a path on which the vehicle may travel in a current path prediction process. That is, under constraint of the motion constraint path, a reference path that complies with a motion principle of the vehicle may be obtained, to avoid generating an unreachable path of the vehicle.

In this implementation of this application, an input for a reference trajectory generator may further include the predicted path generated based on the motion model. This is equivalent to introducing the motion model as constraint, so that the predicted path is a drivable path, to improve prediction accuracy.

In a possible implementation, the generating the navigation guidance based on the navigation data, the map data, and the lane sensing data may further include: determining a lane change decision of the vehicle based on the navigation data, the map data, and the lane sensing data, where the lane change decision indicates whether the vehicle changes a lane; and generating the navigation guidance based on the lane change decision.

In an implementation of this application, whether the vehicle changes a lane in an actual application scenario may be more accurately determined based on the navigation data, the map data, and the lane sensing data, so that an accurate lane-level navigation guidance is generated based on a decision of whether the vehicle changes the lane.

In a possible implementation, the determining the lane change decision of the vehicle based on the navigation data, the map data, and the lane sensing data may include: determining, based on the map data and the lane sensing data, a lane on which the vehicle currently travels; obtaining, based on the lane sensing data and the navigation data, a probability that the vehicle transfers from the current lane to each of N lanes, where N is a positive integer, and the N lanes are determined from the lane sensing data; determining a transfer path of the vehicle based on the probability that the vehicle transfers from the current lane to each of the N lanes; and obtaining the lane change decision based on the transfer path.

Therefore, in an implementation of this application, a hidden markov chain is introduced to determine a possible lane change path, and a transfer probability is introduced to determine a possible path of the vehicle, so that accuracy of obtaining the transfer path is improved. In addition, even in a complex road condition, for example, in a scenario in which a lane line sensing result is inaccurate, for example, there are a plurality of lanes, a lane line is worn out, or a lane is blocked by another vehicle, a lane on which the vehicle travels can be accurately identified, to implement very accurate navigation guidance.

In a possible implementation, the obtaining, based on the lane sensing data and the navigation data, the probability that the vehicle transfers from the current lane to each of the N lanes may include: using the map data and the lane sensing data as inputs for a classification network, and dividing the map into a plurality of regions by using the classification network, where the plurality of regions include a high confidence region, and the high confidence region includes a region whose confidence is higher than a preset value; extending the map based on the high confidence region, to obtain an extended map, for example, extending a low confidence region in the map based on the high confidence region, to improve information richness of the low confidence region; and obtaining, based on the extended map, the probability that the vehicle and the navigation path transfer from the current lane to each of the N lanes. Therefore, in an implementation of this application, even for some maps with low information richness, the information richness of the maps may be improved by extending the maps based on high confidence regions, so that dependence on a high definition map can be reduced, and accurate navigation guidance can still be implemented in a standard definition (standard definition, SD) map.

In a possible implementation, the generating the navigation guidance based on the lane change decision may include: if the lane change decision is lane change traveling, generating the navigation guidance based on the transfer path; or if the lane change decision is lane keeping traveling, keeping, as the navigation guidance, a generated guidance line indicating lane keeping. For the lane change decision, the navigation guidance may be generated based on the transfer path determined based on the transfer probability. For the lane keeping traveling decision, the generated guidance line indicating lane keeping may be kept as the navigation guidance.

In a possible implementation, a head-up display HUD or a display is further disposed in the vehicle, and the displaying the navigation guidance includes: displaying the navigation guidance by using the HUD, where a display position of the navigation guidance matches the environment; or displaying, on the display, a scene image in the lane sensing data, and superimposing and displaying the navigation guidance on a lane in the scene image. Therefore, in the method provided in this application, the navigation guidance may be superimposed and displayed by using the scene image displayed on the HUD or the display, to display the navigation guidance in an actual scenario. This improves availability of the navigation guidance.

According to a second aspect, this application provides a navigation apparatus, including:
an obtaining module, configured to obtain navigation data and lane sensing data, where map data includes data of a map of a vehicle traveling region, the navigation data includes a navigation path of the vehicle when the vehicle travels in the map, and the lane sensing data includes information about at least one lane that is determined based on information collected in an environment in which the vehicle is located;
a processing module, configured to generate navigation guidance based on the navigation data and the lane sensing data; and
a display module, configured to display the navigation guidance, where the navigation guidance is used to provide guidance for the vehicle to travel along the navigation path, the navigation guidance is used to identify a drivable lane corresponding to the navigation path in the environment, and the corresponding drivable lane in the environment includes a traveling path of the vehicle that is obtained based on the lane sensing data.

In a possible implementation, the processing module is further configured to: determine the lane sensing data through sensing based on data collected by the sensor of the vehicle. For example, the lane information may be determined based on a lane line included in the lane sensing data, or the lane sensing data may be obtained through an output after a lane sensing data is used as an input for a pre-trained lane sensing model. The lane sensing data may specifically include the information about the at least one lane in the environment in which the vehicle is located, and may specifically include information like a lane line, lane positioning, or a lane quantity of the at least one lane. The at least one lane may specifically include a lane on which the vehicle currently travels, a lane adjacent to the vehicle, or a lane in front of the vehicle. Therefore, in the method provided in this embodiment of this application, the information about the lane in the environment in which the vehicle is located may be obtained based on sensing of the environment in which the vehicle is located.

In a possible implementation, the lane sensing data may specifically include data collected by the sensor in the vehicle. For example, the sensor may include but is not limited to an image sensor, a radar, an infrared sensor, or a depth sensor. In other words, the lane sensing data may be but is not limited to data of an environment sensed by the sensor, for example, the image sensor, the radar, the infrared sensor, or the depth sensor. Therefore, in this implementation of this application, the data obtained through sensing by the sensor may be used to sense a specific status of the environment in which the vehicle is located, so that lane-level navigation guidance is determined based on a sensing result, without depending on an HD map.

In a possible implementation, the navigation data may specifically include map data and a navigation path. The map data is data of a map of a vehicle traveling region, and the navigation path is a path planned by the vehicle for traveling in a region corresponding to the map. The navigation data may be specifically generated based on a user trigger, or may be generated based on an autonomous driving function of the vehicle, or the like. This may be specifically determined based on an actual application scenario.

In a possible implementation, the processing module is specifically configured to: use map data and historical motion information of the vehicle as inputs for a prediction model, and output a predicted path of the vehicle, where the prediction model is configured to output the traveling path of the vehicle based on input data; and generate the navigation guidance based on the predicted path, the navigation data, and the lane sensing data.

In a possible implementation, the processing module is specifically configured to: if the navigation path in the navigation data includes a path on which the vehicle changes a lane for traveling, obtain a first path and a second path of the navigation path, where the first path is a path on which the vehicle enters a target lane from a current lane, for example, when the vehicle needs to turn, the first path is a traveling path of the vehicle on the navigation path when the vehicle enters a curve, or when the vehicle needs to change a lane, the first path may be a traveling path of the vehicle when the vehicle transfers from the current lane to the target lane, and the target lane is one of the at least one lane; and the second path includes a traveling path planned for the vehicle after the vehicle travels to the target lane, for example, when the vehicle needs to turn, the second path is a traveling path of the vehicle on the navigation path when the vehicle travels out of the curve, or when the vehicle needs to change a lane, the second path may be a traveling path of the vehicle after the vehicle transfers from the current lane to the target lane; determine a plurality of trajectory points based on the predicted path, the first path, and the second path, where the plurality of trajectory points include a curve entry trajectory point and a curve exit trajectory point, the curve entry trajectory point includes a point obtained based on the first path, and the curve exit trajectory point includes a point obtained based on the second path; and generate the navigation guidance based on the plurality of trajectory points.

In a possible implementation, the processing module is specifically configured to: fit the plurality of trajectory points, to generate a turning guidance curve, where the turning guidance curve indicates a lane on which the vehicle travels in the environment.

Optionally, when the processing module fits the turning guidance curve, the curve model may be used to obtain the smoother guidance line through fitting, to improve visual experience of the user.

In a possible implementation, when the vehicle turns, the processing module is specifically configured to: obtain a polyline point set, where the polyline point set includes a current position of the vehicle, a point on an untraveled path in the predicted path, and a polyline formed between trajectory points that are in the plurality of trajectory points and that are not reached by the vehicle; and fit the polyline point set, to generate the turning guidance curve.

In a possible implementation, the processing module is specifically configured to: when the vehicle travels to the curve entry point, fit trajectory points on the first path based on a curve model, to generate the turning guidance curve pointing to the curve exit trajectory point; and when the vehicle travels to the curve exit point, fit trajectory points in the second path based on the curve model, to generate the turning guidance curve pointing from the vehicle to an end of the predicted path.

In a possible implementation, the prediction model specifically includes:
a map encoder, configured to extract a feature from the map data to obtain a map feature;
a motion encoder, configured to extract a feature from the historical motion information of the vehicle, to obtain a motion feature;
a fusion encoder, configured to extract a feature from the map feature and the motion feature, to obtain a global feature;
a reference path generator, configured to generate a reference path of the vehicle based on a previous frame of predicted path; and
a path decoder, configured to generate the predicted path based on the global feature and the reference path.

In a possible implementation, the prediction model further includes:
a vision encoder, configured to extract a feature from an input image or point cloud data, to obtain a vision feature, where the image may be data collected by an image sensor, and the point cloud data may include data collected by a radar; and
a path decoder, further configured to generate the predicted path based on the vision feature, the global feature, and a path feature.

In a possible implementation, the reference path generator is further configured to obtain the reference path based on the previous frame of predicted path and a motion constraint path, where the motion constraint path is a path generated based on a physical motion model of vehicle traveling, and the motion constraint path is used as constraint for outputting the reference path. The previous frame of predicted path is a path output by the prediction model when navigation guidance is generated or updated last time. The reference path is a path on which the vehicle may travel in a current path prediction process. That is, under constraint of the motion constraint path, a reference path that complies with a motion principle of the vehicle may be obtained, to avoid generating an unreachable path of the vehicle.

In a possible implementation, the processing module is specifically configured to: determine a lane change decision of the vehicle based on the navigation data, the map data, and the lane sensing data, where the lane change decision indicates whether the vehicle changes a lane; and generate the navigation guidance based on the lane change decision.

In a possible implementation, the processing module is specifically configured to: determine, based on the map data and the lane sensing data, a lane on which the vehicle currently travels; obtain, based on the lane sensing data and the navigation data, a probability that the vehicle transfers from the current lane to each of N lanes, where N is a positive integer, the N lanes are determined from the lane sensing data; determine a transfer path of the vehicle based on the probability that the vehicle transfers from the current lane to each of the N lanes; and obtain the lane change decision based on the transfer path.

In a possible implementation, the processing module is specifically configured to: use the map data and the lane sensing data as inputs for a classification network, divide the map into a plurality of regions by using the classification network, where the plurality of regions include a high confidence region, and the high confidence region includes a region whose confidence is higher than a preset value; extend the map based on the high confidence region, to obtain an extended map; and obtain, based on the extended map and the navigation path, the probability that the vehicle transfers from the current lane to each of the N lanes.

In a possible implementation, the processing module is specifically configured to: if the lane change decision is lane change traveling, generate the navigation guidance based on the transfer path; or if the lane change decision is lane keeping traveling, keep, as the navigation guidance, a generated guidance line indicating lane keeping.

In a possible implementation, a head-up display HUD or a display is further disposed in the vehicle, and the display module is specifically configured to: display the navigation guidance by using the HUD, where a display position of the navigation guidance matches the environment; or display, on the display, a scene image of the environment in which the vehicle is located, and superimpose and display the navigation guidance on a lane in the scene image.

According to a third aspect, this application provides an electronic device. The electronic device includes a display apparatus, a memory, and one or more processors. The memory stores code of a graphical user interface of an application, and the one or more processors are configured to execute the code of the graphical user interface (GUI) that is stored in the memory, to display the graphical user interface on the display apparatus; and the graphical user interface includes:
displaying navigation guidance, where the navigation guidance is generated based on navigation data, map data, and scene data, the map data includes data of a map of a vehicle traveling region, the navigation data includes a navigation path of the vehicle when the vehicle travels in the map and may include a path generated based on a traveling start point and a destination of the vehicle, and the scene data is information collected in an environment in which the vehicle is located and may specifically include environment sensing data collected by a sensor in the vehicle; and the navigation guidance may be used to identify a drivable lane corresponding to the navigation path in the environment, where the corresponding drivable lane in the environment includes a traveling path of the vehicle that is obtained through sensing based on the scene data, or a lane that is actually drivable by the vehicle and on which a lane line or no lane line is drawn, and the navigation guidance is superimposed on the sensed lane for displaying.

Therefore, in this implementation of this application, the navigation guidance may be superimposed and displayed on a lane in the GUI, to implement more accurate lane-level guidance.

Optionally, the display apparatus may specifically include a HUD or a display.

In a possible implementation, if the display apparatus includes a HUD, a projection position of a drivable lane of the vehicle on a windshield may be determined based on a line of sight point of a user and the scene data, and the navigation guidance may be displayed at the projection position, to improve ease of use of the navigation guidance.

In a possible implementation, if the display apparatus includes a display, a scene image, namely, an image of a drivable region of the vehicle, may be displayed on the display, and the navigation guidance may be superimposed and displayed on a lane in the scene image, to improve ease of use of the navigation guidance.

In addition, for a manner of generating the navigation guidance, refer to any one of the first aspect or the optional implementations of the first aspect. Details are not described herein again.

According to a fourth aspect, an embodiment of this application provides a navigation apparatus, including a processor and a memory. The processor and the memory are interconnected by using a line, and the processor invokes program code in the memory to perform a processing-related function in the method shown in any one of the first aspect or the optional implementations of the first aspect. Optionally, the navigation apparatus may be a chip.

According to a fifth aspect, an embodiment of this application provides a navigation apparatus. The display apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect.

According to a sixth aspect, an embodiment of this application provides a computer-readable storage medium including instructions. When the instructions are run on a computer, the computer is enabled to perform the method in any one of the first aspect or the optional implementations of the first aspect.

According to a seventh aspect, an embodiment of this application provides a computer program product including instructions. When the computer program product runs on a computer, the computer is enabled to perform the method according to any optional implementation of the first aspect or the second aspect.

According to an eighth aspect, an embodiment of this application provides a vehicle. The vehicle includes the apparatus according to the third aspect and at least one display apparatus.

Optionally, the display apparatus may specifically include a HUD, a display, or the like.

### BRIEF DESCRIPTION OF DRAWINGS

FIG. 1 is a diagram of a structure of a vehicle according to this application;
FIG. 2 is a diagram of another structure of a vehicle according to this application;
FIG. 3 is a diagram of a structure of an HUD according to this application;
FIG. 4 is a diagram of another structure of an HUD according to this application;
FIG. 5 is a schematic flowchart of a navigation method according to this application;
FIG. 6 is a diagram of a structure of a prediction model according to this application;
FIG. 7 is a diagram of a navigation instruction generation manner according to this application;
FIG. 8 is a schematic flowchart of another navigation method according to this application;
FIG. 9 is a schematic flowchart of another navigation method according to this application;
FIG. 10 is a schematic flowchart of another navigation method according to this application;
FIG. 11 is a diagram of another manner of generating navigation guidance according to this application;
FIG. 12 is a diagram of another structure of a prediction model according to this application;
FIG. 13 is a diagram of another manner of generating navigation guidance according to this application;
FIG. 14 is a diagram of another manner of generating navigation guidance according to this application;
FIG. 15 is a diagram of another manner of generating navigation guidance according to this application;
FIG. 16 is a diagram of a GUI of navigation guidance according to this application;
FIG. 17 is a diagram of a GUI of navigation guidance according to this application;
FIG. 18 is a diagram of a GUI of navigation guidance according to this application;
FIG. 19 is a diagram of a GUI of navigation guidance according to this application;
FIG. 20 is a diagram of a structure of a navigation apparatus according to this application; and
FIG. 21 is a diagram of a structure of another navigation apparatus according to this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

A method provided in this application may be applied to a vehicle traveling scenario, to provide lane-level navigation guidance, which is more suitable for an actual application scenario.

First, the method provided in this application may be applied to a device having a display apparatus, for example, the vehicle or an electronic device. The display apparatus may specifically include an electronic device display, a head-up display (head-up display, HUD), a central control screen, a dashboard display, and the like.

The method provided in this application may be applied to a driving scenario of the vehicle, where the driving scenario may specifically include user driving of a vehicle, autonomous driving of a vehicle, assisted driving of a vehicle, and the like.

The following describes a structure of a vehicle provided in this application or a vehicle to which this application is applied. The vehicle has one or more display apparatuses. In a traveling process of the vehicle, lane-level navigation guidance may be displayed in the one or more display apparatuses, to provide navigation guidance that is more suitable for a real environment for vehicle traveling.

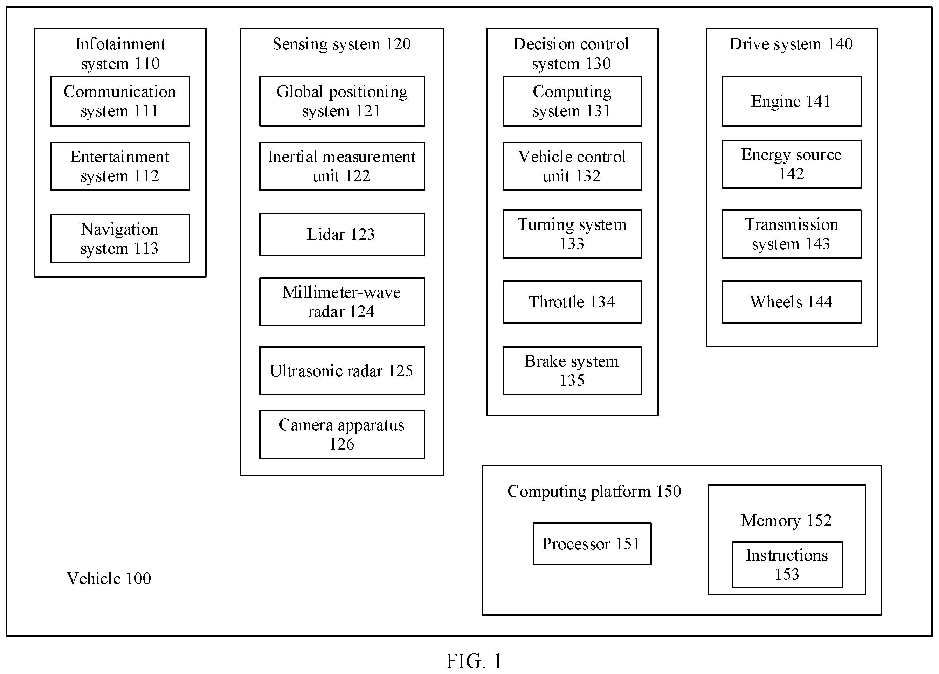

For example, FIG. 1 is a diagram of a structure of a vehicle according to an embodiment of this application. FIG. 1 is a functional block diagram of a vehicle 100 according to an embodiment of this application. The vehicle 100 may be configured to be in a fully or partially autonomous driving mode. For example, the vehicle 100 may obtain ambient environment information of the vehicle 100 by using a sensing system 120, and obtain an autonomous driving strategy based on analysis of the ambient environment information for implementation of fully autonomous driving, or present an analysis result to a user for implementation of partially autonomous driving.

The vehicle 100 may include various subsystems, such as an infotainment system 110, the sensing system 120, a decision control system 130, a drive system 140, and a computing platform 150. Optionally, the vehicle 100 may include more or fewer subsystems, and each subsystem may include a plurality of components. In addition, all the subsystems and components of the vehicle 100 may be interconnected in a wired or wireless manner. A model that needs to be verified and that is mentioned below in this application may include a model used to implement each system or subsystem in the vehicle.

In some embodiments, the infotainment system 110 may include a communication system 111, an entertainment system 112, and a navigation system 113.

Data that needs to be displayed on the display and that is mentioned in the following embodiments of this application may include data generated by each system in the vehicle during running of the vehicle, for example, a running status of each system or collected data.

The communication system 111 may include a wireless communication system 111. The wireless communication system 111 may perform wireless communication with one or more devices directly or through a communication network. For example, the wireless communication system 111 may use 3G cellular communication, such as CDMA, EVDO, GSM/GPRS, or 4G cellular communication, such as LTE, or 5G cellular communication. The wireless communication system 111 may communicate with a wireless local area network (wireless local area network, WLAN) through Wi-Fi. In some embodiments, the wireless communication system may directly communicate with a device through an infrared link, Bluetooth, or ZigBee. The wireless communication system 111 may include one or more dedicated short-range communication (dedicated short-range communication, DSRC) devices, and these devices may include public and/or private data communication between the vehicles and/or roadside stations.

The entertainment system 112 may include a central control screen, a microphone, and a sounder. The user may listen to a radio and play music in the vehicle based on the entertainment system 112. Alternatively, a mobile phone is connected to the vehicle, and screen projection of the mobile phone is implemented on the central control screen. The central control screen may be a touchscreen, and the user may perform an operation by touching the screen. In some cases, a voice signal of a user may be obtained by using a microphone, and some control performed by the user on the vehicle 100 is implemented based on analysis of the voice signal of the user, for example, a temperature inside the vehicle is adjusted. In some other cases, music may be played for the user by using the speaker.

The navigation system 113 may include a map service provided by a map provider, to provide navigation of a traveling route for the vehicle 100, and the navigation system 113 may be used together with a global positioning system 121 and an inertial measurement unit 122 of the vehicle. The map service provided by the map supplier may be a standard definition (standard definition, SD) map, or may be a high definition (high definition, HD) map, or may further include an SD+ map, an SD Pro map, an ADAS map, or the like. This is not limited in this application.

In addition, in some driving scenarios, information about an environment in which the vehicle is located, navigation information, or the like may be further displayed on the central control screen. The central control screen may be one of displays mentioned in the following implementations of this application.

The sensing system 120 may include several types of sensors that sense information about an ambient environment of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the vehicle 100 that is monitored. Sensor data from one or more of these sensors may be used to detect an object and corresponding features (a position, a shape, a direction, a speed, and the like) of the object. This detection and recognition are key functions of safe operations of the vehicle 100. The lane sensing data mentioned in implementations of this application may include but is not limited to data collected by the sensor disposed in the sensing system.

The global positioning system 121 may be configured to determine a geographical position of the vehicle 100.

The inertial measurement unit 122 is configured to sense a position and an orientation change of the vehicle 100 based on an inertial acceleration. In some embodiments, the inertial measurement unit 122 may be a combination of an accelerometer and a gyroscope.

The lidar 123 may sense, by using a laser, an object in an environment in which the vehicle 100 is located. In some embodiments, the lidar 123 may include one or more laser sources, a laser scanner, one or more detectors, and another system component.

The millimeter-wave radar 124 may sense an object in an ambient environment of the vehicle 100 by using a radio signal. In some embodiments, in addition to sensing the object, the millimeter-wave radar 124 may be further configured to sense a speed and/or a forward direction of the object.

The ultrasonic radar 125 may sense an object around the vehicle 100 by using an ultrasonic signal.

The camera apparatus 126 may be configured to capture image information of the ambient environment of the vehicle 100. The camera apparatus 126 may include a monocular camera, a binocular camera, a structured light camera, a panoramic camera, and the like. The image information obtained by the camera apparatus 126 may include static image information, and may further include video stream information.

The decision control system 130 includes a computing system 131 that performs analysis and decision-making based on information obtained by the sensing system 120. The decision control system 130 further includes a vehicle control unit 132 that controls a power system of the vehicle 100, and a turning system 133, a throttle 134, and a brake system 135 that are configured to control the vehicle 100.

The computing system 131 may process and analyze various information obtained by the sensing system 120 to recognize a target, an object, and/or a feature in the ambient environment of the vehicle 100.

The vehicle control unit 132 may be configured to coordinate and control a power battery and an engine 141 of the vehicle, to improve power performance of the vehicle 100.

The turning system 133 may be configured to adjust a moving direction of the vehicle 100.

The throttle 134 is configured to control an operating speed of the engine 141 and further control a speed of the vehicle 100.

The brake system 135 is configured to control the vehicle 100 to decelerate. The brake system 135 may use friction to reduce a rotational speed of wheels 144.

In addition, the decision control system 130 may further include a dashboard (not shown in FIG. 1). The dashboard is usually disposed near the steering wheel of the vehicle, or is disposed at a position in the vehicle that is convenient for a user to observe. The dashboard may also be one of the displays mentioned in this application.

In some possible scenarios, data displayed on the central control screen and the dashboard may be combined for displaying on one display, or the central control screen and the dashboard may be a same display or regions for split-region display on a same display.

The drive system 140 includes a component that provides power for the vehicle 100 to move. In an embodiment, the drive system 140 may include the engine 141, an energy source 142, a transmission system 143, and the wheels 144.

Examples of the energy source 142 include gasoline, diesel, another petroleum-based fuel, propane, another compressed gas-based fuel, anhydrous alcohol, a solar panel, a battery, and another power source. The energy source 142 may also provide energy for another system of the vehicle 100.

The transmission system 143 may transfer mechanical power from the engine 141 to the wheels 144. The transmission system 143 may include a gearbox, a differential, and a drive shaft.

Some or all functions of the vehicle 100 are controlled by the computing platform 150. The computing platform 150 may include at least one processor 151. The processor 151 may execute instructions 153 stored in a non-transitory computer-readable medium, for example, a memory 152. In some embodiments, the computing platform 150 may alternatively be a plurality of computing devices that control individual components or subsystems of the vehicle 100 in a distributed manner.

The processor 151 may be any conventional processor, for example, a commercially available CPU. Alternatively, the processor 151 may include a graphics processing unit (graphic processing unit, GPU), a field programmable gate array (field programmable gate array, FPGA), a system on chip (system on chip, SOC), a microcontroller unit (microcontroller unit, MCU), an application-specific integrated circuit (application-specific integrated circuit, ASIC), or a combination thereof. The processor 151 may be located on a device away from the vehicle and wirelessly communicate with the vehicle.

In some embodiments, the memory 152 may include instructions 153 (for example, program logic), and the instructions 153 may be executed by the processor 151 to perform various functions of the vehicle 100.

In addition to the instructions 153, the memory 152 may further store data, such as a road map, route information, a position, a direction, a speed, and other similar vehicle data of the vehicle, and other information. Such information may be used by the vehicle 100 and the computing platform 150 during operation of the vehicle 100 in an autonomous, semi-autonomous, and/or manual mode.

The computing platform 150 may control the functions of the vehicle 100 based on inputs received from various subsystems (for example, the drive system 140, the sensing system 120, and the decision control system 130).

Optionally, one or more of the foregoing components may be installed separately from or associated with the vehicle 100. For example, the memory 152 may exist partially or entirely separate from the vehicle 100. The foregoing components may be communicatively coupled together in a wired and/or wireless manner.

Optionally, the foregoing components are merely examples. During actual application, components in the foregoing modules may be added or deleted according to an actual requirement. FIG. 1 should not be understood as a limitation on embodiments of this application.

An autonomous driving vehicle traveling on a road, for example, the vehicle 100 above, may identify an object in an ambient environment of the vehicle, to determine adjustment on a current speed. The object may be another vehicle, a traffic control device, or an object of another type. In some examples, each recognized object may be considered independently, and a speed to be adjusted for the autonomous driving vehicle may be determined based on a respective feature of the object, for example, a current speed and an acceleration of the object, and a spacing between the object and the vehicle.

Optionally, the vehicle 100 or a sensing and computing device (for example, the computing system 131 and the computing platform 150) associated with the vehicle 100 may predict a behavior of the recognized object based on the features of the recognized object and a state (for example, traffic, rain, and ice on a road) of the ambient environment. Optionally, each recognized object depends on behavior of another recognized object, and therefore all recognized objects may be further considered together to predict behavior of a single recognized object. The vehicle 100 can adjust the speed of the vehicle 100 based on the predicted behavior of the recognized object. In other words, the autonomous driving vehicle can determine, based on the predicted behavior of the object, a stable state to which the vehicle needs to be adjusted (for example, acceleration, deceleration, or stop). In this process, another factor, for example, a transverse position of the vehicle 100 on the road on which the vehicle 100 travels, a curvature of the road, or proximity between static and dynamic objects may also be considered, to determine the speed of the vehicle 100.

In addition to providing an instruction for adjusting the speed of the autonomous driving vehicle, the computing device may further provide an instruction for modifying a turning angle of the vehicle 100, so that the autonomous driving vehicle follows a given trajectory and/or maintains a safe lateral distance and a safe longitudinal distance from an object (for example, a car in an adjacent lane of the road) near the autonomous driving vehicle.

The vehicle 100 may be a car, a truck, a motorcycle, a bus, a boat, an airplane, a helicopter, a recreational vehicle, a playground vehicle, a construction device, a trolley, a golf cart, a train, or the like. This is not specifically limited in this embodiment of this application.

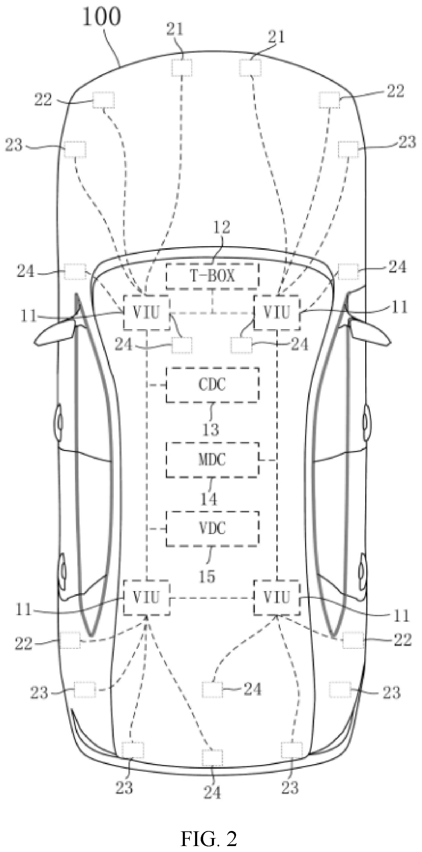

FIG. 2 is a diagram of a system architecture of the vehicle 100 according to some embodiments. The vehicle 100 includes a plurality of units, such as a vehicle integration unit (vehicle integration unit, VIU) 11, a telematics box (telematics box, T-BOX) 12, a cockpit domain controller (cockpit domain controller, CDC) 13, a mobile data center (mobile data center, MDC) 14, and a vehicle domain controller (vehicle domain controller, VDC) 15, and may be configured to support the vehicle in implementing a plurality of control or information exchange functions.

The vehicle 100 further includes a plurality of types of sensors disposed on a vehicle body, including a lidar 21, a millimeter-wave radar 22, an ultrasonic radar 23, and a camera apparatus 24. The sensors mentioned in this embodiment of this application may include the plurality of types of sensors. Each type of sensor may include a plurality of sensors. It should be understood that, although FIG. 2 shows position layouts of different sensors on the vehicle 100, a quantity and a position layout of sensors in FIG. 2 are merely an example. A person skilled in the art may properly select a type, a quantity, and a position layout of the sensors according to a requirement.

With reference to the vehicle structures shown in FIG. 1 and FIG. 2, one or more displays may be disposed in the vehicle, for example, a control screen (that is, a display usually disposed at a central control position) and a dashboard display (that is, a display usually disposed on a dashboard or a display configured to display a dashboard), a head-up display (head-up display, HUD), a rearview mirror display, a rear-row display, or the like. Optionally, the HUD in the vehicle provided in this application may be specifically an augmented reality head-up display (Augmented Reality Head-Up Display, AR-HUD), to display navigation guidance more vividly.

The following uses navigation guidance displayed on the HUD as an example. When the navigation guidance is displayed on the HUD, content that needs to be focused on during traveling of the vehicle may be projected to the windshield by using a line of sight of a driver as a center. In this way, the driver can know the information as much as possible without lowering the head or turning the head. This reduces accidents and improves traveling safety. According to the method provided in this application, navigation guidance that is more suitable for an actual road can be displayed on the windshield by using the HUD, and the navigation guidance that is more suitable for the actual road can be generated without relying on the high definition map. This can adapt to more scenarios, for example, a scenario with a complex road condition. To further improve traveling experience and display a more comprehensive navigation guidance, specifically, an AR-HUD may be further used to display the navigation guidance.

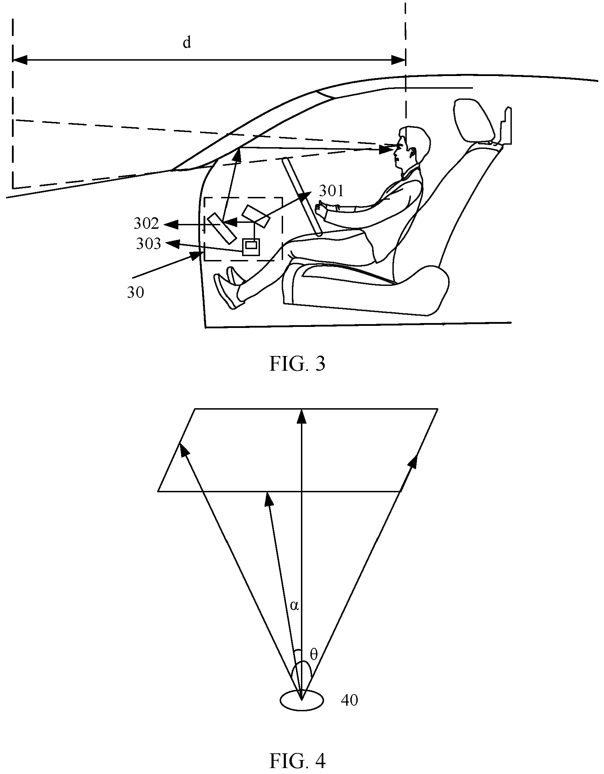

Refer to FIG. 3. For ease of understanding, the following describes an imaging structure of the HUD. The HUD 30 may be disposed in the vehicle, and includes a plurality of parts. For example, the HUD 30 may include a correction mirror 301, a concave mirror 302, an image generation unit 303, and the like shown in FIG. 3.

The image generation unit 303 may be configured to generate an optical signal of a to-be-displayed image.

The concave mirror 302 reflects the optical signal to the correction mirror 301.

The correction mirror 301 reflects an incident optical signal to a windshield of the vehicle.

The concave mirror 302 and the correction mirror 301 form an optical amplification circuit, to amplify and display the optical signal generated by the image generation unit 303 on the windshield.

Compared with the conventional HUD, the AR-HUD usually has a longer virtual image distance (virtual image distance, VID), for example, a distance d shown in FIG. 3, and a wider field of view (field of view, FOV). The FOV may be shown in FIG. 4, to be specific, an included angle formed by using a center of driver's eyes (that is, a line of sight point 40 shown in FIG. 4) and a virtual image range. The FOV may be specifically classified into a horizontal field of view *θ* and a vertical field of view *α*. From a perspective of a user, the user can see a larger AR-HUD display range, and a range indicated in an actual scenario is also larger. In other words, in the method provided in this application, the AR-HUD may be used to display navigation guidance, to display lane-level navigation guidance that has a larger field of view and that is more suitable for the actual scenario for the user.

The following first describes a procedure of the method provided in this application.

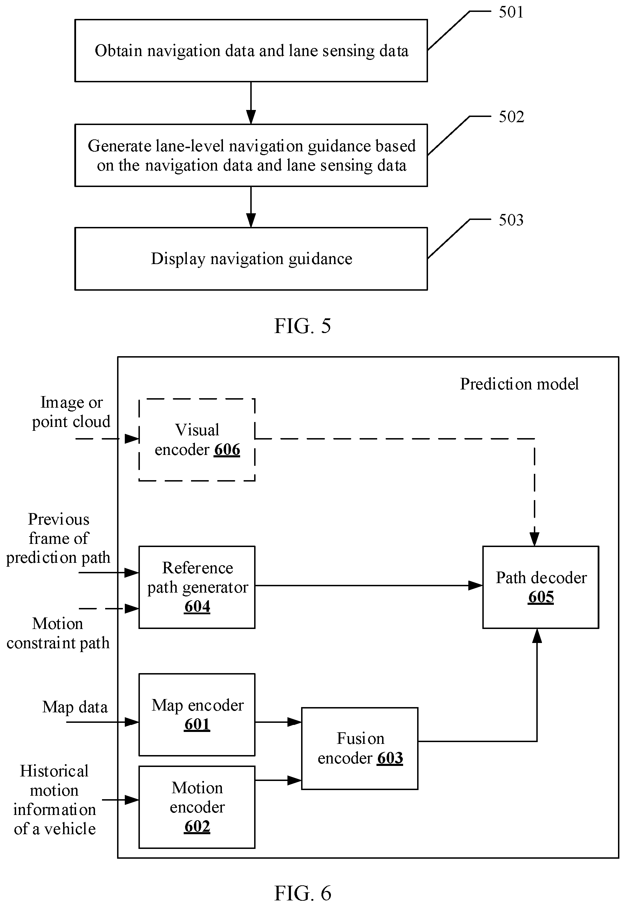

FIG. 5 is a schematic flowchart of a navigation method according to this application.

It should be noted that the method provided in this application may be applied to a device, for example, a vehicle or a vehicle-mounted terminal. For ease of understanding, devices to which the method provided in this application is applied are collectively referred to as an electronic device below. It should be understood that the electronic device mentioned below may specifically include a vehicle or another device that has a display apparatus or establishes a connection to a display apparatus, and may be specifically adjusted based on an actual application scenario. This is not limited in this application.

In addition, it should be further noted that, in a vehicle traveling process, the navigation guidance may be updated in real time in the vehicle traveling process. In an implementation of this application, an example of a manner of generating one frame of navigation guidance is described below. A generation frequency or an update frequency of the navigation guidance may be specifically determined based on an actual application scenario. This is not limited in this application.

501: Obtain navigation data and lane sensing data.

The navigation data is specifically divided into map data and a navigation path. The map data may include data of a map of a vehicle traveling region. The map data may be prestored in an electronic device, or may be loaded from a server when navigation is started. The navigation path may include a path on which a vehicle travels on the map. The path may be a path generated based on a trigger operation of a user, or may be a path recommended based on historical data of the user, or the like, and may be used to guide a path on which the vehicle needs to travel.

The lane sensing data may include information about at least one lane that is obtained through lane sensing based on data collected by a sensor disposed in the vehicle. The lane sensing data may also be referred to as sensing data or another name.

In a possible implementation, the lane sensing data may be determined through sensing based on the data collected by the sensor of the vehicle. For example, lane information may be determined based on a lane line included in the lane sensing data, or the lane sensing data may be obtained/output after the lane sensing data is used as an input for a pre-trained lane sensing model. The lane sensing data may specifically include the information about the at least one lane in the environment in which the vehicle is located, and may specifically include information like a lane line, lane positioning, or a lane quantity of the at least one lane. The at least one lane may specifically include a lane on which the vehicle currently travels, a lane adjacent to the vehicle, or a lane in front of the vehicle. Therefore, in the method provided in this embodiment of this application, the information about the lane in the environment in which the vehicle is located may be obtained based on sensing of the environment in which the vehicle is located.

In a possible implementation, the lane sensing data may specifically include data collected by the sensor in the vehicle. For example, the sensor may include but is not limited to an image sensor, a radar, an infrared sensor, or a depth sensor. In other words, the lane sensing data may be but is not limited to data of an environment sensed by the sensor, for example, the image sensor, the radar, the infrared sensor, or the depth sensor. Therefore, in this implementation of this application, the data obtained through sensing by the sensor may be used to sense a specific status of the environment in which the vehicle is located, so that lane-level navigation guidance is determined based on a sensing result, without depending on an HD map. In addition, optionally, historical motion information of the vehicle may be further collected, so that a more accurate calculation result can be obtained with reference to motion data of the vehicle when a vehicle path is predicted, lane-level positioning is performed, and the like subsequently. This improves accuracy of navigation guidance. The historical motion information of the vehicle may specifically include information, for example, a vehicle speed, a turning angle, and a traveling direction of the vehicle.

502: Generate lane-level navigation guidance based on the navigation data and the lane sensing data.

Then, sensing may be performed on the environment in which the vehicle is located based on the map data and the lane sensing data, and lane-level guidance is generated based on a sensed scenario, the navigation data, and the map data, to provide more accurate navigation guidance that is more suitable for an actual scenario for the user.

The navigation guidance may indicate the vehicle to travel along the navigation path, and may sense, based on the lane sensing data and the map data, a road in the environment in which the vehicle is located. When the navigation path is guided, the navigation path may be guided based on the sensed lane. In other words, the navigation guidance may be used to identify a drivable lane corresponding to the navigation path in the environment, to implement the lane-level navigation guidance.

In other words, in the method provided in this application, a road on which the vehicle can travel in a real scenario may be identified based on the lane sensing data and the map data. Specifically, the road may be a lane on which a lane line is drawn, or may be a lane on which the vehicle can actually travel and on which no lane line is drawn. The lane-level navigation guidance is generated based on the sensed lane, so that navigation guidance that is more suitable for the real scenario can be provided without depending on a high definition map.

In this application, some possible manners of generating navigation guidance are described by using examples. There may be a plurality of manners of generating navigation guidance. For example, for different scenarios, an adaptive manner may be adaptively selected to generate the navigation guidance. The following describes some possible manners of generating the navigation guidance.

It should be noted that there may be a plurality of manners of generating the navigation guidance in this application. For ease of understanding, the following separately describes manners of generating the navigation guidance based on path prediction and based on a lane change decision. It should be understood that the following mentioned manners based on a prediction model and based on the lane change decision may be implemented in combination, or different manners may be selected for different scenarios to generate the navigation guidance, or the like. Specifically, a proper manner may be selected based on an actual application scenario. In other words, this application provides the plurality of different manners of generating the navigation guidance, and a combination manner of the different manners of generating the navigation guidance is not limited.

### Manner 1: Based on the path prediction

This application provides a possible implementation. A pre-trained prediction model may be used to predict a trajectory of a vehicle. For example, the map data and the historical motion information of the vehicle (that is, vehicle motion data in a historical time period) are used as inputs for the prediction model, to output a predicted path of the vehicle. The navigation guidance is generated based on the predicted path, the map data, and the lane sensing data. In this implementation of this application, a neural network may be used to predict the predicted path of the vehicle, that is, a path on which the vehicle can travel in a future time period, to generate more accurate navigation guidance based on the predicted path, the actual scenario sensing data, and the map data.

First, a possible structure of the prediction model is described.

Refer to FIG. 6. The prediction model may include but is not limited to one or more of the following modules:
a map encoder 601, configured to extract a feature from the input map data, to obtain a map feature;
a motion encoder 602, configured to extract a feature from the historical motion information of the vehicle, to obtain a motion feature, where the historical motion information may include information generated by motion of the vehicle in a previous time period, for example, information like a vehicle speed, a turning angle, and a historical path of the vehicle;
a fusion encoder 603, or may also be referred to as a map-motion encoder, is configured to extract a feature from the map feature and the motion feature, to obtain a global feature;
a reference path generator 604, configured to generate a reference path of the vehicle based on a previous frame of predicted path, where navigation guidance in a traveling process of the vehicle usually changes in real time, the navigation guidance may be updated per one frame, the previous frame of predicted path is a predicted path output by the prediction model when a previous frame of navigation guidance is generated or updated, and the reference path is a possible traveling track that is of the vehicle in a future time period and that is generated based on the historical motion information of the vehicle; and
a path decoder 605, configured to generate the predicted path based on the global feature and the reference path.

In an implementation of this application, the pre-trained prediction model may be used, and information in each dimension is used as the input for the prediction model, to output a current predicted path on which the vehicle can travel. In this way, when the navigation guidance is subsequently generated, more accurate navigation guidance may be generated based on the predicted path.

To improve accuracy of the predicted path, in the method provided in this application, lane sensing data may be further used to enhance environment sensing, to improve accuracy of the predicted path based on enhanced environment sensing. In other words, this application further provides an optional implementation. The prediction model may further include:
a vision encoder 606, configured to extract a feature from the input lane sensing data (for example, data collected of the environment, like an image or a point cloud), to obtain a vision feature.

The path decoder 605 is further configured to generate the predicted path based on the vision feature, the global feature, and a path feature.

Therefore, in this implementation of this application, the lane sensing data of the environment in which the vehicle is located that is collected may be used to sense the environment, to generate a more accurate predicted path with reference to an environment sensing result.

In addition, to further improve reachability of the predicted path, in this application, a predicted path that better conforms to a physical motion model of the vehicle may be obtained with reference to a motion model of the vehicle. In other words, this application further provides a possible implementation. A motion constraint path may be generated based on the physical motion model of the vehicle. The reference path generator is further configured to obtain a reference path based on the previous frame of predicted path and a motion constraint path. The motion constraint path is a path generated based on a physical motion model of vehicle traveling, and the motion constraint path is used as constraint for outputting the reference path, to avoid outputting an unreachable path of the vehicle.

Optionally, a manner of generating the navigation guidance may further specifically include: For a lane change path, that is, if the predicted path is a scenario in which the vehicle needs to change a lane for traveling, for example, the vehicle changes a lane for traveling when traveling straight or the vehicle changes a lane for traveling when passing through an intersection, a first path and a second path in the navigation path may be obtained, where the first path is a curve entry path when the vehicle enters a target lane (that is, a lane on which the vehicle needs to change the lane for traveling) in the navigation path, and the second path is a curve exit path when the vehicle travels to the target lane in the navigation path. Then, a plurality of trajectory points are determined based on the predicted path, the first path, and the second path, where the plurality of trajectory points may include at least a curve entry trajectory point and a curve exit trajectory point, the curve entry trajectory point is a point on the curve entry path (determined based on the first path) when the vehicle enters a curve, and the curve exit trajectory point is a point on the curve exit path (determined based on the second path) when the vehicle exits the curve. When the vehicle travels, the navigation guidance may be generated in real time based on the plurality of trajectory points. Usually, the navigation path is a traveling path of the vehicle that is planned only based on a map. Therefore, there may be a deviation between the navigation path and an actual traveling path of the vehicle. Therefore, in the solution provided in this application, a traveling path of the vehicle in an actual application scenario is predicted. When the trajectory points are determined, the first path may be adsorbed to the predicted path, the first path and the predicted path may be fused, or a path that is in the predicted path and that is parallel to the first path is used as the first path, so that the navigation path is adsorbed to a more accurate predicted path, to obtain the first path that may represent the curve entry path on which the vehicle may travel in the actual application scenario. When the navigation guidance is generated, the navigation guidance may be generated with reference to the first path that is more suitable for the actual scenario, to implement more accurate guidance.

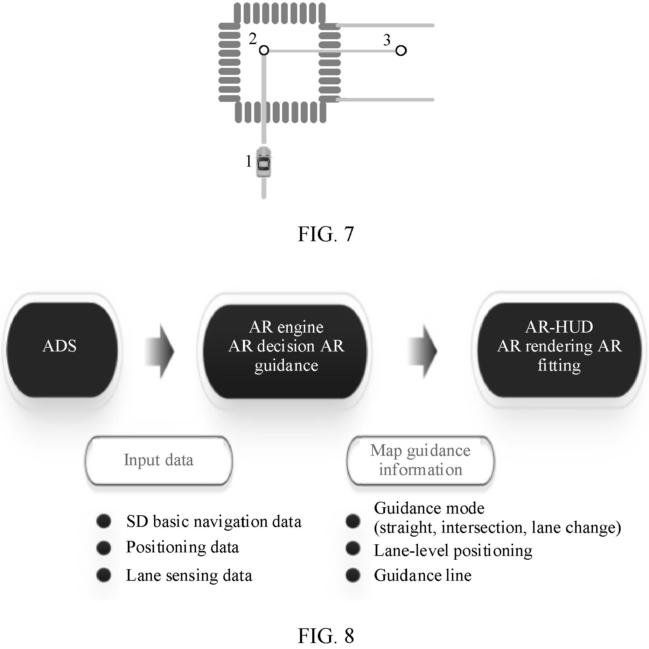

For example, as shown in FIG. 7, a curve entry path and a curve exit path are shown. When the vehicle needs to turn, a current position of the vehicle is used as a point 1, a point 2 is a predicted point when the vehicle turns, and a point 3 is a point after the vehicle exits the curve. A path formed by the point 1 and the point 2 is the curve entry path, and a path formed by the point 2 and the point 3 is the curve exit path. For ease of understanding, the curve entry path may be understood as a path formed from a current position of the vehicle to a middle point of the curve when the vehicle travels into the curve. The curve mentioned in this application is a vehicle traveling road on which the vehicle needs to have a specific turning angle when the vehicle turns, turns back, or changes a lane. The curve exit path is a path from an end point of the curve to a straight traveling lane after the vehicle travels out of the curve.

Therefore, in this implementation of this application, navigation guidance may be generated through the points, and lane-level guidance is updated in real time based on trajectory points of the vehicle when the vehicle travels, to provide clearer navigation guidance for the vehicle when the vehicle changes the lane for traveling.

Optionally, when the plurality of trajectory points are determined, sampling may be performed from the plurality of initially determined trajectory points, to obtain a plurality of trajectory points that better adapt to an actual traveling path of the vehicle, and then the plurality of sampling points are fitted, to generate the turning guidance curve. Therefore, in this implementation of this application, trajectory point sampling may be used to avoid generating an unreachable curve.

Optionally, to generate smoother navigation guidance and provide more accurate guidance, a curve model may be used to generate curve guidance when the navigation guidance is generated, so that the navigation path is more suitable for an actual traveling path of the vehicle. For example, when the navigation guidance is generated based on the plurality of trajectory points, fitting may be performed on the plurality of trajectory points based on the curve model to generate the turning guidance curve, and the navigation guidance is generated based on the turning guidance curve. For example, the turning guidance curve is used as the navigation guidance, or the turning guidance curve is used as a part of the navigation guidance.

Specifically, when the vehicle changes a lane for traveling, to provide more accurate navigation guidance, navigation guidance with a clearer direction may be obtained in a polyline fitting manner. For example, a polyline point set (which may also be referred to as a trajectory point set, a trajectory point polyline, or the like) may be first obtained. The polyline point set may include a current position of the vehicle, a point on an untraveled path in the predicted path, and a trajectory point that is in the plurality of trajectory points and that is not reached by the vehicle. A polyline is formed between the plurality of trajectory points. The point on the untraveled path in the predicted path is a point on a path that is in the predicted path and that is not reached by the vehicle. The trajectory point that is in the plurality of trajectory points and that is not reached by the vehicle is a point that is in the plurality of determined trajectory points and that is not reached by the vehicle. Polyline fitting is performed on the polyline point set, and the turning guidance curve is generated based on the polyline collected. Therefore, in this implementation of this application, a smooth curve may be generated in the polyline fitting manner, to generate a reachable curve and improve accuracy of the generated navigation guidance.

Optionally, to make curve entry navigation and curve exit navigation of the vehicle more accurate, when the turning guidance curve is generated in a vehicle traveling process, a curve pointing to the curve entry trajectory point or the curve exit trajectory point is generated based on fitting of the trajectory points, so that a traveling destination point of the vehicle is more accurate. For example, when the vehicle travels to the curve entry point, the trajectory points on the first path are fitted based on the curve model, to generate the turning guidance curve pointing to the curve exit trajectory point. When the vehicle travels to the curve exit point, the trajectory points in the second path are fitted based on the curve model, to generate the turning guidance curve pointing to the target lane. In this implementation of this application, when the vehicle changes the lane for traveling, fitting may be performed based on the trajectory points, and the guidance curve is generated for the curve, to improve guidance accuracy for the curve. For complex road conditions, for example, a plurality of parallel lanes exist or no lane line exists after a turn, more accurate navigation guidance may be implemented according to the method provided in this application.

### Manner 2: Based on the lane change decision

This application further provides a possible implementation. A lane change decision of the vehicle may be determined based on the navigation data, the map data, and the lane sensing data. The lane change decision indicates whether the vehicle changes a lane. The navigation guidance is generated based on the lane change decision. Therefore, in this implementation of this application, whether the vehicle changes a lane may be determined with reference to an environment in which the vehicle is located and a path indicated by a navigation path, and the navigation guidance is generated based on the lane change decision. This may be applicable to a scenario in which the vehicle needs to change the lane for traveling.

Optionally, when the lane change decision is determined, a probability that the vehicle travels from a current position to each lane may be calculated, a probability that corresponds to each transfer path and that may be generated by the vehicle is determined based on the probability, and whether the vehicle changes a lane is determined based on the probability. Specifically, a lane on which the vehicle currently travels may be determined based on the map data and the lane sensing data. A probability that the vehicle transfers from the current lane to each of N lanes is obtained based on the lane sensing data and the navigation data, where N is a positive integer, and the N lanes are lanes in the environment in which the vehicle is located, for example, lanes determined from the lane sensing data. A transfer path of the vehicle is determined based on the probability that the vehicle transfers from the current lane to each of the N lanes. The lane change decision is obtained based on the transfer path. Equivalently, in the method provided in this embodiment of this application, the probability corresponding to each possible transfer path of the vehicle may be calculated based on a markov chain, and an appropriate transfer path is selected based on the probability of each transfer path, to more accurately determine the lane change decision.

In addition, the method provided in this application may not depend on a high definition map. Therefore, some data in a map region may be inaccurate. For example, lane positioning in the map data does not match an actual lane position, or no drivable road exists in the map data. Therefore, in these cases, in this application, a map is divided into a plurality of regions, including a high confidence region, that is, a region whose matching degree between positioning in the map data and positioning in the lane sensing data collected is greater than a specific value. Specifically, the map data and the lane sensing data may be used as inputs for a classification network, and classification results of the regions are output, that is, confidence of the regions. The regions may be divided into a high confidence region and a low confidence region. Confidence of the high confidence region is higher than confidence of the low confidence region. For example, a region whose confidence is higher than a confidence threshold may be used as the high confidence region, and a region whose confidence is not higher than the confidence threshold may be used as the low confidence region. Then, the map is extended based on the high confidence region to obtain an extended map. For example, because the high confidence region usually has high accuracy, the map may be extended based on the high confidence region and the lane sensing data, to obtain a more comprehensive extended map. In addition, the probability that the vehicle transfers from the current lane to each of the N lanes is calculated based on the extended map.

In other words, in the method provided in this embodiment of this application, lane positioning in the map is matched with lane positioning in an actual scenario by using the classification network, to output the high confidence region with the high matching degree and the low confidence region with the low matching degree. To improve overall accuracy of the map, the map is extended based on the high confidence region, to obtain the extended map with the higher matching degree between lane positioning and lane positioning in the actual scenario. For example, for some maps with low map precision or unclear lane lines, according to the method provided in this application, accurate lane positioning can be implemented without relying on a high definition map, so that a subsequent more accurate navigation guidance is generated based on more accurate lane positioning.

Optionally, when the navigation guidance is generated, if the current lane change decision is lane change traveling, the navigation guidance may be generated based on the transfer path, and guidance displayed in a navigation guidance display interface is updated. If the current lane change decision is current lane keeping traveling, a straight guidance line may be kept as the navigation guidance, where the straight guidance line is the navigation guidance indicating the vehicle to keep traveling in the current lane.

503: Display the navigation guidance.

After the navigation guidance is generated, the navigation guidance may be displayed on a display apparatus. For example, the navigation guidance may be projected into the vehicle by using a HUD, or the actual scenario or a rendered image of the actual scenario may be displayed on the display, and the navigation guidance is superimposed and displayed.

In an implementation of this application, lane information of the vehicle traveling in the actual scenario may be sensed based on the sensing data collected by the sensor of the vehicle, to generate lane-level navigation guidance, so as to improve navigation guidance that is more suitable for the real scenario. In addition, the lane in the real scenario are sensed based on the data collected by the sensor, and accurate lane positioning can be implemented without depending on the high definition map, to implement more accurate navigation guidance.

The foregoing describes the method provided in this application. The following describes the method provided in this application in more detail with reference to a specific application scenario.

The method provided in this application may be applied to a driving scenario of a vehicle. The driving scenario may be, for example, autonomous driving, assisted driving, or user driving. Assisted driving may include assisting a user in driving a vehicle, and may also include an auxiliary function during autonomous driving. Autonomous driving means that a vehicle automatically drives.

For example, for an architecture of the method provided in this application, refer to FIG. 8. The method provided in this application may be deployed in a vehicle control unit or a vehicle-mounted terminal connected to the vehicle. As shown in FIG. 8, the method provided in this application is deployed in an AR engine.

First, input data may specifically include SD basic navigation data, positioning data, lane sensing data, and the like. The input data may be data read from a storage, or may include data from an intelligent driving system, an automated driving system (automated driving system, ADS), or the like of the vehicle, or may be directly collected of an interface provided by the vehicle, or the like. For example, in the structure of the vehicle that is shown in FIG. 1 or FIG. 2, when the vehicle runs, VIUs in the vehicle may transmit data to each other, or transmit data to a controller of the vehicle or the like, so that data required in this application can be collected of an interface in the vehicle, for example, data collected by the sensor of the vehicle, for example, information about an environment in which the vehicle is located that is collected by a lidar, a millimeter-wave radar, an infrared sensor, a depth sensor, or an image sensor.

The AR engine is a module that is in a device and that is configured to drive AR display, and as shown in FIG. 8, may be used to generate map guidance information, for a guidance mode of navigation, for example, guidance straight, an intersection, or a lane change, lane-level positioning, and a corresponding guidance line.

After navigation guidance information is obtained, the navigation guidance may be displayed in the AR device. Specifically, the navigation guidance may be displayed on the display, for example, a real-time environment image of the vehicle is displayed, and the AR navigation guidance is superimposed and displayed on the real-time environment image, or the navigation guidance may be displayed on an AU-HUD.

In the following implementations of this application, an example in which the navigation guidance is displayed in the AU-HUD is used for description, and this is not limited. The AR-HUD mentioned below may alternatively be replaced with the display for displaying. This may be specifically adjusted based on an actual application scenario.

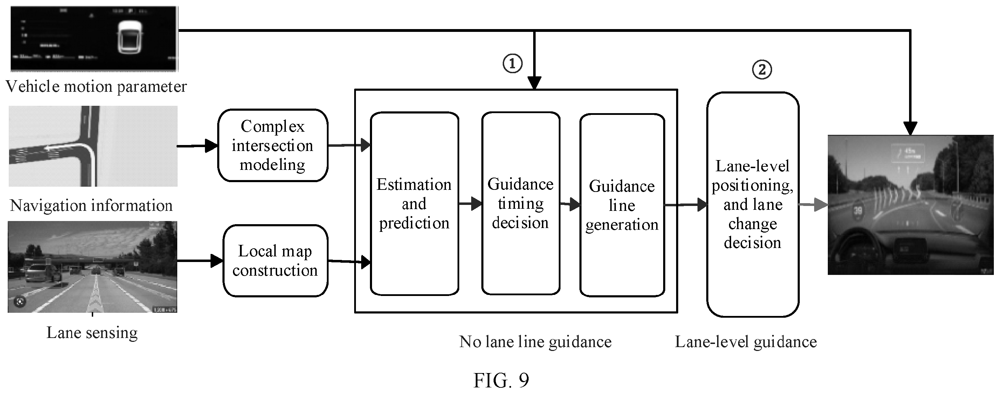

For example, a method procedure provided in this application may be shown in FIG. 9.

First, the input data may include information like a vehicle motion parameter (for example, information like a vehicle speed and a turning angle), navigation information (including the map data), and lane sensing data (for example, the data collected by the sensor of the vehicle).

The navigation information and the lane sensing information may be used to model a complex intersection, or may be used to construct a local map. Navigation guidance is generated based on a complex intersection modeling result and a local map construction result. For a scenario without a lane line, lane estimation and prediction, guidance timing decision, guidance line generation, and the like may be performed. For a scenario with a lane line, lane-level positioning, lane change decision, and the like may be implemented. The navigation guidance is displayed in real time in the AR-HUD.

The following describes a more comprehensive procedure of the method in this application with reference to a specific application scenario.

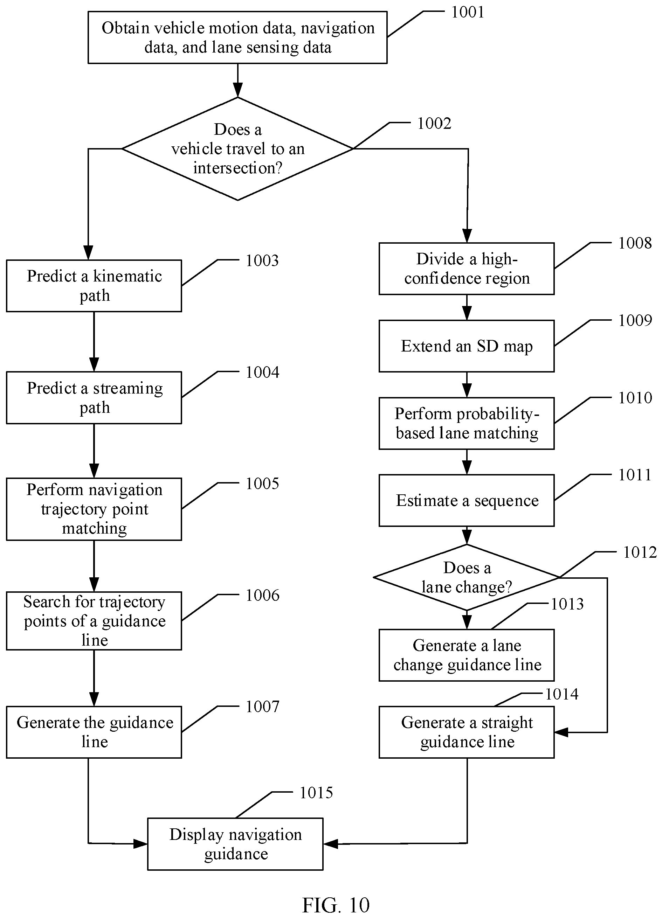

FIG. 10 is a schematic flowchart of another navigation method according to this application. Details are as follows.

It should be noted that, for ease of understanding, the plurality of navigation guidance manners are separately applied to different scenarios. For example, the manner 1 may be applied to an intersection scenario, and the manner 2 may be applied to a straight-through lane change scenario. Certainly, in an actual application scenario, the manner 1 may be applied to the straight-through lane change scenario, and the manner 2 may be applied to the intersection scenario. Alternatively, the manner 1 and the manner 2 may be applied to different scenarios in a converged manner. This may be specifically adjusted based on an actual application scenario. This is not limited in this application.

1001: Obtain vehicle motion data, navigation data, and lane sensing data.

First, after navigation for a trip of a vehicle is triggered, data required for the navigation may be collected in real time in a traveling process of the vehicle. The required data may be specifically classified into vehicle motion data, navigation data, lane sensing data, and the like.

The vehicle motion data may specifically be collected elements such as a position and an orientation of the vehicle in a world coordinate system, or data collected by sensors such as a GNSS, an IMU, and a WSS wheel speed sensor, for example, a speed, an acceleration, an angle, and an angular velocity of the vehicle.

The navigation data may include a navigation path in a map that is generated based on map data when the navigation starts. Specifically, the navigation data may include but is not limited to a planned path of the vehicle in an SD map, a lane passing attribute (for example, whether a lane allows turning or allows only straight-through), and the like.

The environment sensing data may specifically come from environment sensing data like an image or a point cloud, and may specifically include a lane line, a road edge of a lane, a type of the lane line (the type includes but is not limited to a dashed line, a solid line, a half solid and half dashed line, a white line, a yellow line, a double line, and the like), and the like.

In a traveling process of the vehicle, the sensor disposed in the vehicle may collect information about a location of the vehicle and a current status of the vehicle in real time, so that navigation guidance is updated in real time based on the navigation path.

1002: Determine whether the vehicle travels to an intersection. If the vehicle travels to the intersection, step 1003 is performed; and if the vehicle does not travel to the intersection, step 1009 is performed.

In the traveling process of the vehicle, it may be determined whether the vehicle travels to the intersection. If the vehicle travels to the intersection, the navigation guidance may be generated in the foregoing manner 1. In other words, step 1003 is performed. If the vehicle does not travel to the intersection, the navigation guidance may be generated in the foregoing manner 2. In other words, step 1009 is performed.

Specifically, a manner of determining whether the vehicle travels to the intersection may be specifically identifying, through positioning of the vehicle in the map and based on environment sensing data collected, whether the vehicle is located at the intersection, or determining, based on a positioning result of the vehicle in the map and an environment sensing result, whether the vehicle is located at the intersection. This may be specifically determined based on an actual application scenario. For example, whether the vehicle is located at the intersection may be determined based on the positioning of the vehicle in the map. Alternatively, the environment sensing data may be used as an input for a pre-trained recognition network, to identify whether the vehicle is located at the intersection. Alternatively, an identification result of vehicle positioning may be fused with an identification result obtained based on the environment sensing data, to more accurately identify whether the vehicle is located at the intersection.

1003: Predict a kinematic path.

For the vehicle motion data collected, high-dimensional combination space of physical quantities such as a short-time speed, an acceleration, an angular velocity, and an angular acceleration of the vehicle may be predicted based on a kinematic model of the vehicle, for example, a constant turn rate and velocity (Constant Turn Rate and Velocity, CTRV) model or a constant turn rate and acceleration (Constant Turn Rate and Acceleration, CTRA) model, so that a predicted path that may be generated by the vehicle is calculated based on these parameters.

The constant turn rate and velocity (Constant Turn Rate and Velocity, CTRV) model is used as an example. If a pose of the vehicle at a moment t is (*xₜ, yₜ, θₜ*)*,* a pose (*x*_{*t+*1}*, y*_{*t+*1}, *θ*_{*t+*1}) of the vehicle at a moment t + 1 may be represented as follows: $\left[\begin{matrix}{x}_{t + 1} \\ {y}_{t + 1} \\ {θ}_{t + 1}\end{matrix}\right] = f \left(t\right) = \left[\begin{matrix}{x}_{t} + \frac{{v}_{t}}{{w}_{t}} \left(sin\left({w}_{t}Δt+{θ}_{t}\right)-sin\left({θ}_{t}\right)\right) \\ {y}_{t} + \frac{{v}_{k}}{{w}_{t}} \left(-cos\left({w}_{t}Δt+{θ}_{t}\right)+cos\left({θ}_{t}\right)\right) \\ {θ}_{t} + {w}_{t} Δ t\end{matrix}\right]$

Herein, *vₜ* represents a speed of the vehicle at the moment *t, wₜ* represents an angular velocity of the vehicle at the moment t, and a path of the vehicle between the moment t and the moment t + 1 may be determined based on a pose change between the moment t and the moment t + 1.

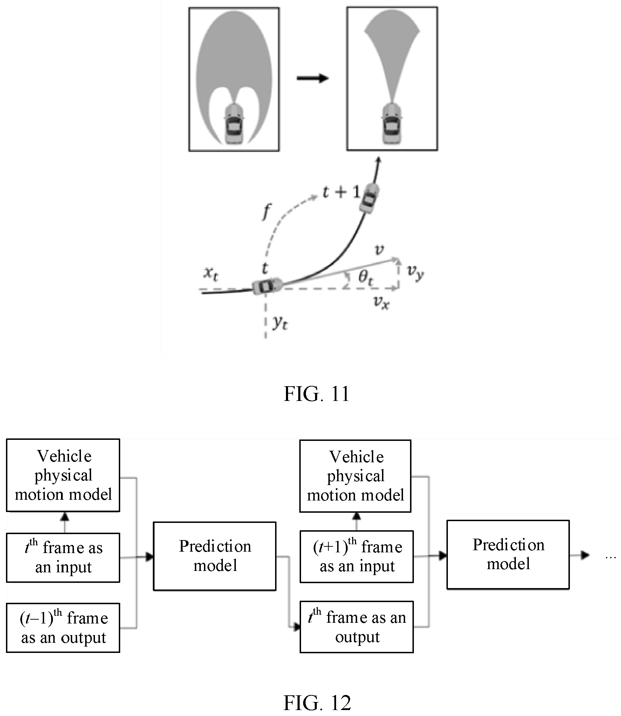

For example, an effect implemented based on the motion model may be shown in FIG. 11. A mathematical equation is constructed through the vehicle motion model based on vehicle sensor inputs of a t^{th} frame and before the t^{th} frame, to derive and calculate a possible future motion trajectory of the vehicle without training, so as to implement knowledge-driven path prediction and avoid outputting an unreachable path.

1004: Predict a streaming path.

The map data, the environment sensing data, and the kinematic predicted path may be used as inputs for the prediction model, and a predicted path is output.

Inputs of a streaming trajectory prediction model includes a plurality of parts: the vehicle sensor inputs of the t^{th} frame and before the t^{th} frame (including but not limited to an image or a point cloud that is collected by an in-vehicle camera or a LiDAR), a (t-1)^{th} frame of a plurality of output trajectories of the streaming trajectory prediction model, the t^{th} frame of an output trajectory of the vehicle motion model, map information, and motion information of the vehicle in a past period of time. Outputs of the streaming trajectory prediction model is a plurality of possible predicted paths of the ego-vehicle in a future period of time. The streaming trajectory prediction model usually includes a deep learning-based method, and model training needs to be performed in advance.

For example, as shown in FIG. 12, the t^{th} frame of predicted path and the (t-1)^{th} frame of predicted path of the vehicle motion model may be used as inputs for the prediction model, to output the t^{th} frame of predicted path. When a next frame (t+1)^{th} of predicted path is predicted, the predicted path obtained based on the vehicle motion model may be used as an input for the prediction model, to output the (t+1)^{th} frame of predicted path. The rest may be deduced by analogy.

Specifically, for the prediction model, refer to FIG. 6 and FIG. 7 and corresponding descriptions. Similar parts are not described again. The following describes in detail, by using an example, functions performed by all modules of the prediction model.

Map encoder: receives vectorized standard-definition map information, segments road network information in the map based on a minimum length (for example, 5 meters), and stores segmented road network information as a tensor of *Nₘₐₚ* × *Dₘₐₚ. Nₘₐₚ* is a quantity of map elements divided into segments, and *Dₘₐₚ* is a quantity of attributes of each map element (including a start point coordinate, a lane type, and the like). A graph neural network is used as the map encoder to perform hierarchical encoding on the tensor, to obtain a map feature of *Nₘₐₚ* × *D_{hidden}*.

Motion encoder: receives a tensor that is of historical motion information of a vehicle and whose shape is *T* × *D_{car}*, where *T* is a historical track time length, and *D_{car}* is a quantity of historical motion attributes (including a coordinate, a speed, an orientation angle, and the like). An LSTM is used as the motion encoder to encode motion information, to obtain a vehicle motion feature of *T* × *D_{hidden}.*

Map-motion encoder (that is, the fusion encoder 603): splices the obtained map feature and vehicle motion feature to obtain an input (*Nₘₐₚ + T*) × *D_{hidden}*, and then processes the input by using a self-attention mechanism, to obtain a global feature in a form of (*Nₘₐₚ* + *T*) × *D_{hidden}.*

Reference track generator: receives the previous frame of predicted path of K × *T_{future}* × 2, where K is a quantity of predicted paths, *T_{future}* is a predicted time length, and 2 represents two-dimensional coordinate information; and receives a current frame of predicted path of the motion model of M × *T_{future}* × 2. The reference track generator splices the two and converts a spliced path to a current vehicle coordinate system, removes excessive prediction, and supplements missing prediction, to obtain a reference track of (K + M) × *T_{future}* × 2.

Image encoder: receives an RGB vehicle perspective image of H × *W* × 3, and processes the image by using a convolutional neural network, to obtain an image feature of h × *w* × *c*.

Path decoder: uses the reference track of (K + M) × *T_{future}* × 2 to generate a query of (K + M) × *D_{hidden}* by using an MLP. First, cross-attention (cross-attention) is performed on the query and the global feature obtained by the map-motion encoder, to obtain a query feature 1 of (K + M) × *D_{hidden}*. Then, the reference track is projected to the vehicle perspective image based on a vehicle camera parameter and an assumed track height coordinate, an image feature of each reference track is extracted based on a position of the track in the perspective image by using feature pooling and a deformable convolution, and projection transformation is performed, to obtain a track feature of (K + M) × *D_{hidden}*. The feature is added to the query feature 1 and projection transformation is performed, to obtain a query feature 2 of (K + M) × *D_{hidden}.* The foregoing feature extraction process is repeated R times, and a final (K + M) × *D_{hidden}* outputs predicted paths of (K + M) × *T_{future}* × 2 and confidence (K + M) × *T_{future}* × 1 of predicted paths by using an MLP. In a training process, the predicted path and a true value track are trained by using a minimum mean square error and a winner-take-all policy. In an inference process, K trajectories with highest confidence in the predicted path of (K + M) × *T_{future}* × 2 are selected as an input for a next moment.

1005: Perform navigation trajectory point matching.

In the method provided in this application, navigation trajectory points are re-adaptively constructed based on the predicted pose of the vehicle motion, to reduce an error between the navigation trajectory points and a real environment.

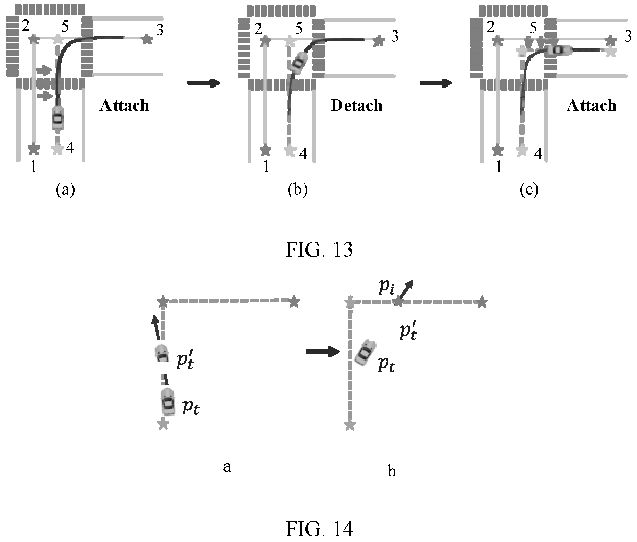

For example, as shown in FIG. 13, trajectory points in a navigation path at an intersection may be split into a curve entry trajectory point (for example, a point 1-2 in FIG. 13) and a curve exit trajectory point (for example, a point 2-3 in FIG. 13) based on a road segment label of the SD map. In this case, motion of the vehicle passing through the intersection may be divided into three phases, which are (a), (b), and (c) shown in FIG. 13.

For (a): Before the vehicle enters the curve, the curve entry trajectory point is attached (Attach) to the vehicle. Before entering the curve, the vehicle may travel along a curve entry road based on the predicted path. In other words, a curve entry vector direction has high confidence. In this case, the curve entry trajectory point is laterally shifted to a path end of the predicted path, and the curve exit trajectory point remains unchanged because there is no additional reference information. The curve entry trajectory point and the curve exit trajectory point are recombined to generate recombined trajectory points (for example, points 4-5-6 in (a) in FIG. 13).

For (b): When the vehicle turns, the trajectory point is detached (Detach) from the vehicle. In a turning process, the vehicle travels in an open region of the intersection, and does not travel along the curve entry trajectory point or the curve exit trajectory point. In this case, the recombined trajectory points (for example, the points 4-5-3 in (b) in FIG. 13) remain unchanged, and the vehicle is guided to a correct curve exit trajectory point.

For (c): When the vehicle completes the turn, the curve exit trajectory point is attached (Attach) to the predicted path of the vehicle. After the turn is completed, the vehicle travels along a curve exit road. In other words, a curve exit vector direction has high confidence. In this case, the curve exit trajectory point is laterally shifted to a path end of the predicted path, and the curve entry recombined trajectory point remains unchanged. The curve exit trajectory point and the curve entry recombined trajectory point are recombined to generate recombined trajectory points (for example, points 4-6-7 in (c) in FIG. 13).

Further, for the navigation data, when the vehicle enters a new intersection, the recombined trajectory points are initialized as original navigation trajectory points, and the original navigation trajectory points are split into a curve entry trajectory point polyline *Pₑ* and a curve exit trajectory point polyline *Pₒ* based on the road segment label.

For the predicted path output in step 1004, an end of the predicted path is projected onto the reorganized trajectory points, and a projection point is denoted as *pᵣ*. A vector direction to which the projection point *pᵣ* belongs is *θᵣ*.

When the projection point belongs to the curve entry trajectory point, and a vector direction of the projection point is similar to a direction of the end of the predicted path, a lateral error *σᵣ* = *pᵥ* - *pᵣ* between a real-time position *pᵥ* of the vehicle and the curve entry trajectory point is calculated, and the curve entry trajectory point is laterally translated to the end of the predicted path. In this case, the laterally translated curve entry trajectory point polyline *P'ₑ = Pₑ + σₚ.* $P {′}_{e} = \left\{{p}_{e}^{0}, {p}_{e}^{1}, ⋯, {p}_{e}^{n}\right\}$ and ${P}_{o} = \left\{{p}_{o}^{0}, {p}_{o}^{1}, ⋯, {p}_{o}^{m}\right\}$ are recombined to generate a reorganized trajectory point polyline P. For *P'ₑ,* $\vec{{p}_{e}^{n}}$ is denoted as a ray of which ${p}_{e}^{n}$ is used as an endpoint and a vector $\vec{{p}_{e}^{n - 1} {p}_{e}^{n}}$ is used as a direction, and ${p}_{e}^{i} {p}_{e}^{i + 1} \left(0\leq i<n-1\right)$ is denoted as a line segment of which a point ${p}_{e}^{i}$ and a point ${p}_{e}^{i + 1}$ are used as endpoints. For *Pₒ,* $\vec{{p}_{o}^{0}}$ is denoted as a ray of which ${p}_{o}^{0}$ is used as an endpoint and a vector $\vec{{p}_{o}^{1} {p}_{o}^{0}}$ is used as a direction, and ${p}_{o}^{i} {p}_{o}^{i + 1} \left(0\leq i<m-1\right)$ is denoted as a line segment of which a point ${p}_{o}^{i}$ and a point ${p}_{o}^{i + 1}$ are used as endpoints. An intersection *Pₜ* between $\vec{P {′}_{e}} = \left\{{\left\{{p}_{e}^{i}{p}_{e}^{i + 1}\right\}}_{i = 0}^{n - 1}, \vec{{p}_{e}^{n}}\right\}$ and $\vec{{P}_{o}} = \left\{\vec{{p}_{o}^{0}}, {\left\{{p}_{o}^{i}{p}_{o}^{i + 1}\right\}}_{i = 0}^{m - 1}\right\}$ is calculated, and then the reorganized trajectory point polyline $P = \left\{{p}_{e}^{0}, {p}_{e}^{1}, ⋯, {p}_{e}^{nt}, {P}_{t}, {p}_{o}^{mt}, {p}_{o}^{mt + 1}, ⋯, {p}_{o}^{m}\right\}$, where *nt* and *mt* respectively represent intersection indexes of *Pₜ* in *̅P̅'̅ₑ̅*̅ and *̅P̅ₒ̅*̅.

When the vector direction of the projection point is not similar to the vehicle direction, the reorganized trajectory points remain unchanged.

When the projection point belongs to the curve exit trajectory point, and the vector direction of the projection point is similar to the direction of the end of the predicted path, a lateral error *σᵣ* = *pᵥ* - *pᵣ* between a real-time position *pᵥ* of the vehicle and the curve exit trajectory point is calculated, and the curve exit trajectory point is laterally translated to the end of the predicted path. In this case, the laterally translated curve exit trajectory point polyline *P'ₒ = Pₒ + σₚ*.${P}_{e} = \left\{{p}_{e}^{0}, {p}_{e}^{1}, ⋯, {p}_{e}^{n}\right\}$ and $P {′}_{o} = \left\{{p}_{o}^{0}, {p}_{o}^{1}, ⋯, {p}_{o}^{m}\right\}$ are recombined to generate a reorganized trajectory point polyline P. For *Pₑ,* $\vec{{p}_{e}^{n}}$ is denoted as a ray of which ${p}_{e}^{n}$ is used as an endpoint and a vector $\vec{{p}_{e}^{n - 1} {p}_{e}^{n}}$ is used as a direction, and ${p}_{e}^{i} {p}_{e}^{i + 1} \left(0\leq i<n-1\right)$ is denoted as a line segment of which a point ${p}_{e}^{i}$ and a point ${p}_{e}^{i + 1}$ are used as endpoints. For *Pₒ*, $\vec{{p}_{o}^{0}}$ is denoted as a ray of which ${p}_{o}^{0}$ is used as an endpoint and a vector $\vec{{p}_{o}^{1} {p}_{o}^{0}}$ is used as a direction, and ${p}_{o}^{i} {p}_{o}^{i + 1} \left(0\leq i<m-1\right)$ is denoted as a line segment of which a point ${p}_{o}^{i}$ and a point ${p}_{o}^{i + 1}$ are used as endpoints. An intersection *Pₜ* between $\vec{{P}_{e}} = \left\{{\left\{{p}_{e}^{i}{p}_{e}^{i + 1}\right\}}_{i = 0}^{n - 1}, \vec{{p}_{e}^{n}}\right\}$ and $\vec{P {′}_{o}} = \left\{\vec{{p}_{o}^{0}}, {\left\{{p}_{o}^{i}{p}_{o}^{i + 1}\right\}}_{i = 0}^{m - 1}\right\}$ is calculated, and then the reorganized trajectory point polyline $P = \left\{{p}_{e}^{0}, {p}_{e}^{1}, ⋯, {p}_{e}^{nt}, {P}_{t}, {p}_{o}^{mt}, {p}_{o}^{mt + 1}, ⋯, {p}_{o}^{m}\right\}$**,** where *nt* and *mt* respectively represent intersection indexes of *Pₜ* in *̅P̅ₑ̅*̅ and *̅P̅'̅ₒ̅*̅.

1006: Search for trajectory points of a guidance line.

More specifically, for the reorganized trajectory points in step 1005 and the predicted path in step 1004, a first projection point of the current pose of the vehicle on the reorganized trajectory points and a second projection point of the end of the predicted path on the reorganized trajectory points are calculated. Weighted fusion is performed on the predicted path and navigation trajectory points between the first projection point and the second projection point, to obtain a proximal guidance trajectory point *Pₙ* through calculation. An intersection point between an end of the proximal guidance trajectory point of the vehicle and the reorganized trajectory points is calculated. When the intersection point exists, the intersection point is used as a start point. When the intersection point does not exist, the second projection point is used as a start point, and a trajectory point after the start point in the reorganized trajectory points is used as a distal guidance trajectory point *P_{f}.* The proximal guidance trajectory point and the distal guidance trajectory point are combined, to obtain a guidance trajectory point P = {*pₙ, P_{f}*} of the vehicle at the current moment.

In addition, as shown in FIG. 14, for a local guidance line in navigation guidance, a polyline *l* = {*pₜ,* ${p}_{t}^{′}$, *pᵢ, p*_{*i+*1}, *···* , *pₙ*} formed by control points of the local guidance line includes a current position *pₜ* of the vehicle, a track prediction position *pt',* and reorganized trajectory points {*pᵢ, p*_{*i+*1,} ... , *pₙ*}(0 ≤ *i* ≤ *n*) that are not reached by the vehicle.

pₜ' is mapped to the reorganized trajectory points to obtain a forward road trajectory point sequence {*p_{c}, p*_{*c+*1}, ···, *pₙ*} (for example, a point {*p*₁, *p*₂} in (a) in FIG. 14) that is not reached by the vehicle. An intersection point between search space (the future possible motion track of the vehicle) and the forward road trajectory point is calculated as a newly added control point, to avoid reverse twisting of the guidance line. For example, there is a left-turn trend in a right-turn curve. If a valid intersection point *pₖ* exists, *i = k,* and *pₜ,* ${p}_{t}^{′}$ and *pₖ* are combined with a forward road trajectory point after the intersection point, to form a guidance line control point polyline *l* = {*pₜ,* ${p}_{t}^{′}$, *pₖ, p*_{*k+*1}*,* ··· , *pₙ*}. If no valid intersection point exists, *i* = *c*, and *pₜ* and ${p}_{t}^{′}$ are combined with the forward road trajectory point, to form a guidance line control point polyline $l = \left\{{p}_{t}, {p}_{t}^{′}, {p}_{c}, {p}_{c + 1}, ⋯, {p}_{n}\right\}$.

1007: Generate the guidance line.

After the trajectory points are collected, trajectory point sampling may be performed on the guidance trajectory points in a manner, for example, equal-interval sampling or curvature threshold sampling, and guidance line control points are formed based on the sampling points to ensure stability of an inter-frame guidance line. Specifically, a curve model that may be used may include but is not limited to a curve model, for example, a B-spline curve or a Bezier curve, to generate a smooth turning guidance line. The B-spline curve is used as an example, a guidance line curve equation C(t) may be represented as follows: $\begin{matrix}{B}_{i , deg} \left(t\right) = \frac{t - {knot}_{i}}{{knot}_{i + deg} - {knot}_{i}} {B}_{i , deg - 1} \left(t\right) + \frac{{knot}_{i + deg + 1} - t}{{knot}_{i + deg + 1} - {knot}_{i + 1}} {B}_{i + 1 , deg - 1} \left(t\right) \\ C \left(t\right) = {\sum }_{i = 0}^{n - 1} {B}_{i , deg} \left(t\right) {P}_{i}\end{matrix}$

Herein, *B_{i,deg}*(*t*) is a basis function, *deg* is a curve order, *knot* is a node table, and *Pᵢ*(*Pᵢ ∈ P*) represents a control point.

After the guidance line of the navigation guidance is generated, the navigation guidance may be displayed, that is, step 1015 is performed.

1008: Divide a high confidence region.

In a scenario other than an intersection scenario, lane-level matching and positioning may be performed, to accurately identify a next traveling path of the vehicle.

First, a map represented by the map data may be divided into a plurality of regions, and a region with high confidence may be selected, for example, a region whose confidence is higher than a confidence threshold, or a region whose matching degree between positioning of the vehicle on the map and positioning of the vehicle that is collected by the sensor of the vehicle is higher than a specific value. For example, initialization of a lane-level matching and positioning model is completed when all lane lines can be accurately identified when the vehicle is usually located on a left or right edge lane of a road or sensing data with a good field of view is used. In this case, SD map route data and positioning data are aligned.

The high confidence region may be determined by using a lightweight image classification network like MobileNetV3 for identification. In this case, accurate lane-level initialization information can be obtained. A current positioning position is denoted as a point A*_{xy},* and a position bound to an SD route is denoted as a point B*_{xy}.* A lane number X in which the vehicle is currently located, a left offset distance W*ₗ* in the current lane, and a current lane width W*ₐₗₗ* may be learned based on sensing information, and a current road direction h may be learned based on positioning information.

A left boundary point of the current road is denoted as C*_{xy},* and a distance between the point A*_{xy}* and the point C*_{xy}* is: $dist = {W}_{all} ∗ \left(X-1\right) + {W}_{l}$

Then, point C*_{xy}*: ${C}_{x} = {A}_{x} + dist ∗ \left(cos\left(h-90\right)-sin∗\left(h-90\right)\right)$ ${C}_{y} = {A}_{y} + dist ∗ \left(cos\left(h-90\right)+sin∗\left(h-90\right)\right)$

Further, a horizontal relative position, namely, an offset α*_{xy},* of the SD route on the current road is determined: ${α}_{xy} = {C}_{xy} - {B}_{xy}$

Therefore, according to the method provided in this application, a lane in an actual application scenario can be accurately identified, so that lane positioning precision in the map is compensated, to obtain accurately positioned lane information.

1009: Extend the SD map.

It can be learned from a collection principle of map making that a Euclidean distance of an offset α*_{xy}* in a limited time and limited space ahead does not change. Based on navigation information, for example, a sensed lane line, positioning, and a quantity of lanes, a current lane-level positioning map is constructed based on skeleton information of an SD map route. The current position is denoted as a point A*_{xy},* and a position bound to the SD route is denoted as B*_{xy}.* It can be inferred, based on the offset α*_{xy}* and the current road direction h, that an intersection of a normal of a traveling direction of the current vehicle and a left boundary of the road is a point C. ${C}_{x} = {B}_{x} + \left‖{α}_{xy}\right‖ ∗ \left(cos\left(h-90\right)-sin∗\left(h-90\right)\right)$ ${C}_{y} = {B}_{y} + \left‖{α}_{xy}\right‖ ∗ \left(cos\left(h-90\right)+sin∗\left(h-90\right)\right)$

If a quantity of current navigation lanes is denoted as N, a center point of each lane is P₁, P₂ ... P*_{N}*, and a width of the current lane is W*ₐₗₗ*. ${P}_{i}^{x} = {C}_{x} + \left(i-1\right) ∗ {W}_{all} ∗ \left(cos\left(h+90\right)-sin∗\left(h+90\right)\right)$ ${P}_{i}^{y} = {C}_{y} + \left(i-1\right) ∗ {W}_{all} ∗ \left(cos\left(h+90\right)+sin∗\left(h+90\right)\right)$

Weighted fusion is performed based on the center point of each lane obtained in the current manner and the sensed lane line, to determine a final center point of each lane.

1010: Perform probability-based lane matching.

Results of sensing, navigation, and positioning all have an impact on formation of a probability of a current lane position. A probability distribution of a lane position of the vehicle changes with the vehicle motion and sensing and navigation information. The probability includes an initial probability, an observation probability, and a transition probability. The initial probability is obtained through even distribution of a quantity of lanes. ${π}_{i} = \frac{1}{N} .$

The observation probability includes a positioning observation probability *P*₁, an observation probability P₂ of a quantity of lanes, an observation probability P₃ of a lane line type, and the like. ${P}_{1} = {\int }_{- \frac{{w}_{all}}{2}}^{\frac{{w}_{all}}{2}} \frac{1}{\sqrt{2 π ∗ {5}^{2}}} {e}^{\frac{- {\left(x-d\right)}^{2}}{2 ∗ {5}^{2}}} dx$

The observation probability P₂ of the quantity of lanes and the observation probability P₃ of the lane line type may be obtained by training a Bayesian network. A total observation probability is as follows: ${P}_{o} = {P}_{1} ∗ {P}_{2} ∗ {P}_{3}$

The transition probability uses a cosine distance. An included angle θ between a positioning displacement line segment and a connection line between each lane center point at a previous moment and each lane center point at a current moment is denoted as follows: ${T}_{ij} = 1 - \frac{\left(1-cos\left(θ\right)\right)}{2}$

Therefore, in this embodiment of this application, the transition probability of the vehicle between lanes may be used, so that a possible transfer position of the vehicle can be predicted subsequently based on the probability.

1011: Estimate a sequence.

In the method provided in this application, a single-frame lane line sensing and positioning problem is converted into an optimal probability problem under continuous spatial-temporal observation based on the vehicle motion data, the lane sensing data, and the navigation data. The N lanes of navigation are considered as N hidden state variables. Based on a hidden markov process, a Viterbi algorithm is used to obtain an optimal lane-level positioning of the vehicle through calculation, and a probabilistic result is output.

Generally, an output result of lane-level positioning is an absolute lane number. However, in this embodiment of this application, a probabilistic output is used to finely represent lane information. This implements a high accuracy of a lane change decision.

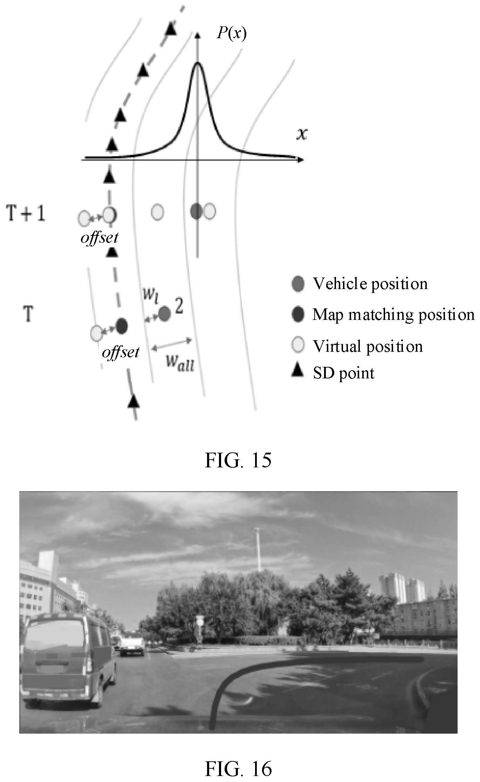

For example, as shown in FIG. 15, a single process of lane-level matching positioning may be divided into several steps: high confidence region initialization, SD route extension and mapping, probabilistic matching positioning, and optimal estimation of a state sequence. When the vehicle is outside a trusted interval, lane-level positioning information may be obtained through sensing or the like. In this embodiment of this application, based on the hidden markov process, the single-frame lane line sensing positioning problem is converted into an optimal probability problem under continuous spatial-temporal observation. Sensing, navigation, and positioning results jointly determine a state transition probability, reduce a possibility of incorrect positioning caused by false detection, missed detection, and blocking, and obtain an optimal estimation of a specific state sequence, that is, obtain a better estimation of the lane on which the vehicle is located.

1012: Determine whether to change a lane. If the lane is changed, step 1013 is performed. If the lane is not changed, step 1014 is performed.

Traffic rule verification is performed based on a lane passing attribute (for example, left turn, straight, or right turn) provided by the navigation data, dashed-line and solid-line information provided by the lane sensing data, and the lane-level positioning result obtained in step 1011, to make a decision on whether the vehicle needs to change a lane currently.

1013: Generate a lane change guidance line.

When the lane change decision is lane change, a trajectory point of the vehicle traveling along the current lane, a lane center point of a target lane, and a remote navigation trajectory point are fused based on the lane sensing data and the navigation data in the environment sensing data, to generate a guidance line control point which includes but is not limited to a curve model like a B-spline curve or a Bezier curve, so as to obtain a smooth lane change guidance line.

1014: Generate a straight guidance line.

When the lane change decision is current lane keeping, a current pose of the vehicle is projected onto the navigation route, navigation trajectory points in front of the vehicle is obtained, and weighted fusion is performed on the lane sensing data and the navigation trajectory points, to be used as guidance line control points. The smooth straight guidance line is generated by including but not limited to using a curve model like a B-spline curve or a Bezier curve.

1015: Display the navigation guidance.

After the navigation guidance is generated, the navigation guidance may be displayed. Specifically, the navigation guidance may be displayed in an AR-HUD, or the navigation guidance may be displayed on a display.

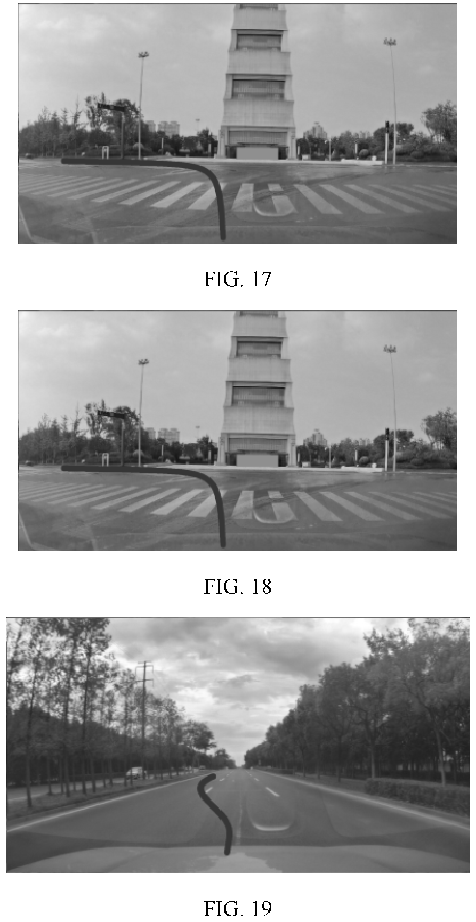

For example, for intersection guidance, an AR-HUD display interface of guidance to turn right may be shown in FIG. 16, and an AR-HUD display interface of guidance to turn left may be shown in FIG. 17.

For another example, for lane change guidance, an AR-HUD display interface of guidance to change a lane to the right may be shown in FIG. 18, and an AR-HUD display interface of guidance to change a lane to the left may be shown in FIG. 19.

According to the method provided in this application, trajectory prediction and local guidance line generation are used to resolve a problem that insufficient precision of the SD map cannot support high-precision navigation. In the scenarios such as no lane line and lane line blocking, the intersection guidance and the lane change guidance can still be stably provided. For example, for the intersection guidance, problems of no lane line constraint at a complex intersection, difficult placement of a guidance line, and easy off-road traveling are overcome. For the lane change guidance, a problem of a lane change error due to a mismatch between lane-level sensing and the navigation information is overcome. In addition, when the guidance is applied to the AR-HUD, a central control perspective is limited. Therefore, a guidance line that adapts to a vehicle position needs to be constructed and generated in real time, instead of directly performing projection transformation on the SD map.

The foregoing describes the method procedure provided in this application. The following describes an apparatus for performing the method procedure provided in this application.

This application further provides an electronic device. The electronic device includes a display apparatus, a memory, and one or more processors. The memory stores code of a graphical user interface of an application, and the one or more processors are configured to execute the code of the graphical user interface (GUI) stored in the memory, to display the graphical user interface on the display apparatus; and the graphical user interface includes:
displaying navigation guidance, where the navigation guidance is generated based on navigation data, map data, and scene data, the map data includes data of a map of a vehicle traveling region, the navigation data includes a navigation path of the vehicle when the vehicle travels in the map and may include a path generated based on a traveling start point and a destination of the vehicle, and the scene data is information collected in an environment in which the vehicle is located and may specifically include environment sensing data collected by a sensor in the vehicle; and the navigation guidance may be used to identify a drivable lane corresponding to the navigation path in the environment, where the corresponding drivable lane in the environment includes a traveling path of the vehicle that is obtained through sensing based on the scene data, or a lane that is actually drivable by the vehicle and on which a lane line or no lane line is drawn, and the navigation guidance is superimposed on the sensed lane for displaying.

Therefore, in this implementation of this application, the navigation guidance may be superimposed and displayed on a lane in the GUI, to implement more accurate lane-level guidance.

The electronic device may be specifically a vehicle, a vehicle-mounted terminal, another navigation apparatus, or the like.

Optionally, the display apparatus may specifically include a HUD or a display.

In a possible implementation, if the display apparatus includes a HUD, for example, may be specifically a conventional HUD or an AR-HUD, a projection position of a drivable lane of the vehicle on a windshield may be determined based on a line of sight point of a user and the scene data, and the navigation guidance may be displayed at the projection position, to improve ease of use of the navigation guidance. For example, as shown in FIG. 16 to FIG. 19, the navigation guidance may be projected on the windshield of the vehicle. Refer to FIG. 3 and FIG. 4. During projection, a position of a lane projection corresponding to the navigation guidance on the windshield may be determined with reference to the line of sight point of the user. In other words, the user observes a position of the lane through the windshield, and the navigation guidance is superimposed and displayed at the position. This is equivalent to the method provided in this application. The navigation guidance obtained by using the method corresponding to FIG. 5 to FIG. 15 in this application is projected onto an actual lane by using the HUD, to improve viewing experience of the user for the navigation guidance and improve user experience.

In a possible implementation, if the display apparatus includes a display, a scene image, namely, an image of a drivable region of the vehicle, may be displayed on the display, and the navigation guidance may be superimposed and displayed on a lane in the scene image, to improve ease of use of the navigation guidance.

In addition, for a manner of generating the navigation guidance displayed in the GUI, refer to the descriptions corresponding to FIG. 5 to FIG. 15. Details are not described herein again.

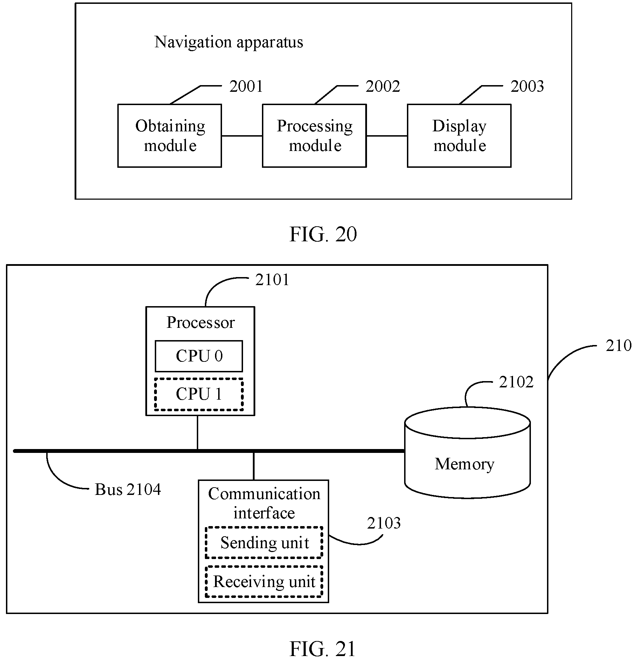

Refer to FIG. 20. FIG. 20 is a diagram of a structure of a navigation apparatus according to this application. The navigation apparatus may include:
an obtaining module 2001, configured to obtain navigation data, map data, and lane sensing data, where the map data includes data of a map of a vehicle traveling region, the navigation data includes a navigation path of a vehicle when the vehicle travels in the map, and the lane sensing data is information collected in an environment in which the vehicle is located;
a processing module 2002, configured to generate a navigation instruction based on the navigation data, the map data, and the lane sensing data; and
a display module 2003, configured to display the navigation instruction, where the navigation instruction indicates the vehicle to drive along the navigation path, the navigation instruction is used to identify a drivable lane corresponding to the navigation path in the environment, and the corresponding drivable lane in the environment includes a drivable path of the vehicle that is obtained through sensing based on the lane sensing data.

In a possible implementation, the processing module 2002 is further configured to: determine the lane sensing data through sensing based on data collected by the sensor of the vehicle. For example, the lane information may be determined based on a lane line included in the lane sensing data, or the lane sensing data may be obtained through an output after a lane sensing data is used as an input for a pre-trained lane sensing model. The lane sensing data may specifically include the information about the at least one lane in the environment in which the vehicle is located, and may specifically include information like a lane line, lane positioning, or a lane quantity of the at least one lane. The at least one lane may specifically include a lane on which the vehicle currently travels, a lane adjacent to the vehicle, or a lane in front of the vehicle. Therefore, in the method provided in this embodiment of this application, the information about the lane in the environment in which the vehicle is located may be obtained based on sensing of the environment in which the vehicle is located.

In a possible implementation, the lane sensing data may specifically include data collected by the sensor in the vehicle. For example, the sensor may include but is not limited to an image sensor, a radar, an infrared sensor, or a depth sensor. In other words, the lane sensing data may be but is not limited to data of an environment sensed by the sensor, for example, the image sensor, the radar, the infrared sensor, or the depth sensor. Therefore, in this implementation of this application, the data obtained through sensing by the sensor may be used to sense a specific status of the environment in which the vehicle is located, so that lane-level navigation guidance is determined based on a sensing result, without depending on an HD map.

In a possible implementation, the navigation data may specifically include map data and a navigation path. The map data is data of a map of a vehicle traveling region, and the navigation path is a path planned by the vehicle for traveling in a region corresponding to the map. The navigation data may be specifically generated based on a user trigger, or may be generated based on an autonomous driving function of the vehicle, or the like. This may be specifically determined based on an actual application scenario.

In a possible implementation, the processing module 2002 is specifically configured to: use map data and historical motion information of the vehicle as inputs for a prediction model, and output a predicted path of the vehicle, where the prediction model is configured to output the traveling path of the vehicle based on input data; and generate the navigation guidance based on the predicted path, the navigation data, and the lane sensing data.

In a possible implementation, the processing module 2002 is specifically configured to: if a navigation path in the navigation data includes a path on which the vehicle changes a lane for traveling, obtain a first path and a second path of the navigation path, where the first path is a path on which the vehicle enters a target lane from a current lane, for example, when the vehicle needs to turn, the first path is a traveling path of the vehicle on the navigation path when the vehicle enters a curve, or when the vehicle needs to change a lane, the first path may be a traveling path of the vehicle when the vehicle transfers from the current lane to the target lane, and the target lane is one of the at least one lane; and the second path includes a traveling path planned for the vehicle after the vehicle travels to the target lane, for example, when the vehicle needs to turn, the second path is a traveling path of the vehicle on the navigation path when the vehicle travels out of the curve, or when the vehicle needs to change a lane, the second path may be a traveling path of the vehicle after the vehicle transfers from the current lane to the target lane; determine a plurality of trajectory points based on the predicted path, the first path, and the second path, where the plurality of trajectory points include a curve entry trajectory point and a curve exit trajectory point, the curve entry trajectory point includes a point determined based on the first path, and the curve exit trajectory point includes a point determined based on the second path; and generate the navigation guidance based on the plurality of trajectory points.

In a possible implementation, the processing module 2002 is specifically configured to: fit the plurality of trajectory points, to generate a turning guidance curve, where the turning guidance curve indicates a lane on which the vehicle travels in the environment.

Optionally, when the processing module fits the turning guidance curve, the curve model may be used to obtain the smoother guidance line through fitting, to improve visual experience of the user.

In a possible implementation, when the vehicle turns, the processing module 2002 is specifically configured to: obtain a polyline point set, where the polyline point set includes a current position of the vehicle, a point on an untraveled path in the predicted path, and a polyline formed between trajectory points that are in the plurality of trajectory points and that are not reached by the vehicle; and fit the trajectory points in the polyline point set, to generate the turning guidance curve.

In a possible implementation, the processing module 2002 is specifically configured to: fit trajectory points on the first path when the vehicle travels to the curve entry point, to generate a turning guidance curve pointing to the curve exit trajectory point; and fit trajectory points in the second path when the vehicle travels to the curve exit point, to generate a turning guidance curve pointing from the vehicle to an end of the predicted path.

In a possible implementation, the prediction model specifically includes:
a map encoder, configured to extract a feature from the map data to obtain a map feature;
a motion encoder, configured to extract a feature from the historical motion information of the vehicle, to obtain a motion feature;
a fusion encoder, configured to extract a feature from the map feature and the motion feature, to obtain a global feature;
a reference path generator, configured to generate a reference path of the vehicle based on a previous frame of predicted path; and
a path decoder, configured to generate the predicted path based on the global feature and the reference path.

In a possible implementation, the prediction model further includes:
a vision encoder, configured to extract a feature from input lane sensing data, to obtain a vision feature; and
a path decoder, further configured to generate the predicted path based on the vision feature, the global feature, and a path feature.

In a possible implementation, the reference path generator is further configured to obtain the reference path based on the previous frame of predicted path and a motion constraint path, where the motion constraint path is a path generated based on a physical motion model of vehicle traveling, and the motion constraint path is used as constraint for outputting the reference path.

In a possible implementation, the processing module 2002 is specifically configured to: determine a lane change decision of the vehicle based on the navigation data and the lane sensing data, where the lane change decision indicates whether the vehicle changes a lane; and generate the navigation guidance based on the lane change decision.

In a possible implementation, the processing module 2002 is specifically configured to: determine, based on the map data and the lane sensing data, a lane on which the vehicle currently travels; obtain, based on the lane sensing data and the navigation data, a probability that the vehicle transfers from the current lane to each of N lanes, where N is a positive integer, the N lanes are determined from the lane sensing data; determine a transfer path of the vehicle based on the probability that the vehicle transfers from the current lane to each of the N lanes; and obtain the lane change decision based on the transfer path.

In a possible implementation, the processing module 2002 is specifically configured to: use the map data and the lane sensing data as inputs for a classification network, divide the map into a plurality of regions by using the classification network, where the plurality of regions include a high confidence region, and the high confidence region includes a region whose confidence is higher than a preset value; extend the map based on the high confidence region, to obtain an extended map; and obtain, based on the extended map and the navigation path, the probability that the vehicle transfers from the current lane to each of the N lanes.

In a possible implementation, the processing module 2002 is specifically configured to: if the lane change decision is lane change traveling, generate the navigation guidance based on the transfer path; or if the lane change decision is lane keeping traveling, keep, as the navigation guidance, a generated guidance line indicating lane keeping.

In a possible implementation, a head-up display HUD or a display is further disposed in the vehicle, and the display module is specifically configured to: display the navigation guidance by using the HUD, where a display position of the navigation guidance matches the environment; or display, on the display, a scene image of the environment in which the vehicle is located, and superimpose and display the navigation guidance on a lane in the scene image.

FIG. 21 is a diagram of a hardware structure of a navigation apparatus 210 according to an embodiment of this application. The navigation apparatus may be deployed in a vehicle, and may be configured to perform the method steps shown in FIG. 3 to FIG. 19. The navigation apparatus may also be referred to as an electronic device.

The navigation apparatus 210 shown in FIG. 21 may include a processor 2101, a memory 2102, a communication interface 2103, and a bus 2104. The processor 2101, the memory 2102, and the communication interface 2103 may be connected through the bus 2104.

The processor 2101 is a control center for generating the navigation apparatus 210, and may be a general-purpose central processing unit (central processing unit, CPU), another general-purpose processor, or the like. The general-purpose processor may be a microprocessor, any conventional processor, or the like.

In an example, the processor 2101 may include one or more CPUs, for example, a CPU 0 and a CPU 1 that are shown in FIG. 21.

The memory 2102 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of an instruction or data structure and capable of being accessed by a computer, but is not limited thereto.

In a possible implementation, the memory 2102 may be independent of the processor 2101. The memory 2102 may be connected to the processor 2101 through the bus 2104, and is configured to store data, instructions, or program code. When invoking and executing the instructions or the program code stored in the memory 2102, the processor 2101 can implement the display method provided in embodiments of this application or extract the GUI provided in embodiments of this application.

In another possible implementation, the memory 2102 may be alternatively integrated with the processor 2101.

The communication interface 2103 is configured to connect the navigation apparatus 210 to another device through a communication network. The communication network may be an Ethernet, a radio access network (radio access network, RAN), a wireless local area network (wireless local area network, WLAN), or the like. The communication interface 2103 may include a receiving unit configured to receive data and a sending unit configured to send data.

The bus 2104 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 21, but this does not indicate that there is only one bus or only one type of bus.

It should be noted that the structure shown in FIG. 21 does not constitute a limitation on the navigation apparatus 210. In addition to the components shown in FIG. 21, the navigation apparatus 210 may include more or fewer components than those shown in the figure, combine some components, or have different component arrangements.

Optionally, the navigation apparatus shown in FIG. 21 is a chip.

An embodiment of this application further provides a digital processing chip. A circuit and one or more interfaces that are configured to implement functions of the processor 2101 or the processor 2101 are integrated into the digital processing chip. When a memory is integrated into the digital processing chip, the digital processing chip may complete the method steps in any one or more of the foregoing embodiments. When no memory is integrated into the digital processing chip, the digital processing chip may be connected to an external memory through a communication interface. The digital processing chip implements, based on program code stored in the external memory, the actions performed by the navigation apparatus in the foregoing embodiments.

An embodiment of this application further provides a computer program product. When the computer program product runs on a computer, the computer is enabled to perform the steps of the methods described in the embodiment shown in FIG. 3.

The navigation apparatus provided in embodiments of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip performs the method described in the embodiment shown in FIG. 3. Optionally, the storage unit is a storage unit in the chip, for example, a register or a cache. Alternatively, the storage unit may be a storage unit that is in the wireless access device and that is outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general purpose processor may be a microprocessor or any conventional processor or the like. The processing unit or the processor may be configured to perform the steps in the methods corresponding to FIG 3.

An embodiment of this application further provides a vehicle. The vehicle includes the apparatus shown in FIG. 12 or FIG. 21.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and accompanying drawings of this application, the terms "first", "second", "third", "fourth", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application. However, the protection scope of this application is not limited thereto. Any change or replacement readily figured out by a person skilled in the art within the technical scope disclosed in this application shall fall within the protection scope of this application.

## Claims

1. A navigation method, comprising:
obtaining navigation data and lane sensing data, wherein the navigation data comprises a navigation path of the vehicle during traveling, and the lane sensing data comprises information about at least one lane that is determined based on information collected in an environment in which the vehicle is located; and
generating navigation guidance based on the navigation data and the lane sensing data, and displaying the navigation guidance, wherein the navigation guidance is used to identify a drivable lane corresponding to the navigation path in the environment, and the drivable lane comprises a traveling path of the vehicle obtained based on the lane sensing data.

2. The method according to claim 1, wherein the generating the navigation guidance based on the navigation data and the lane sensing data comprises:
using map data and historical motion information of the vehicle as inputs for a prediction model, and outputting a predicted path of the vehicle, wherein the prediction model is configured to output the traveling path of the vehicle based on the input data, the historical motion information comprises information generated when the vehicle moves in a historical time period, and the map data comprises data of a map of the vehicle traveling region in the navigation data; and
generating the navigation guidance based on the predicted path, the navigation path, and the lane sensing data.

3. The method according to claim 2, wherein the generating the navigation guidance based on the predicted path, the navigation path, and the lane sensing data comprises:
if the navigation path comprises a path on which the vehicle changes a lane for traveling, obtaining a first path and a second path based on the navigation path and the predicted path, wherein the first path is a path on which the vehicle enters a target lane from a current lane, the second path comprises a traveling path planned for the vehicle after the vehicle travels to the target lane, and the target lane is one of the at least one lane;
determining a plurality of trajectory points based on the first path and the second path, wherein the plurality of trajectory points comprise a curve entry trajectory point and a curve exit trajectory point, the curve entry trajectory point comprises a point determined based on the first path, and the curve exit trajectory point comprises a point determined based on the second path; and
generating the navigation guidance based on the plurality of trajectory points.

4. The method according to claim 3, wherein the generating the navigation guidance based on the plurality of trajectory points comprises:
fitting the plurality of trajectory points, to generate a turning guidance curve, wherein the turning guidance curve indicates a lane on which the vehicle travels in the environment; and
generating the navigation guidance based on the turning guidance curve.

5. The method according to claim 4, wherein when the vehicle turns, the fitting the plurality of trajectory points based on a curve model, to generate the turning guidance curve comprises:
obtaining a polyline point set, wherein the polyline point set comprises a current position of the vehicle, a point on an untraveled path in the predicted path, and a trajectory point that is in the plurality of trajectory points and that is not reached by the vehicle; and
fitting the polyline point set, to generate the turning guidance curve.

6. The method according to claim 4 or 5, wherein the fitting the plurality of trajectory points, to generate the turning guidance curve further comprises:
when the vehicle travels to the curve entry point, performing fitting based on trajectory points on the first path, to generate the turning guidance direction, wherein the turning guidance line points to the curve exit trajectory point; and
when the vehicle travels to the curve exit point, performing fitting based on trajectory points on the second path, to generate the turning guidance curve, wherein the turning guidance curve is a curve pointing from the vehicle to an end of the predicted path.

7. The method according to any one of claims 1 to 6, wherein the generating the navigation guidance based on the navigation data and the lane sensing data further comprises:
determining a lane change decision of the vehicle based on the navigation data and the lane sensing data, wherein the lane change decision indicates whether the vehicle changes a lane; and
generating the navigation guidance based on the lane change decision.

8. The method according to claim 7, wherein the determining the lane change decision of the vehicle based on the navigation data and the lane sensing data comprises:
determining, based on the map data and the lane sensing data, a lane on which the vehicle currently travels, wherein the map data comprises the data of the map of the vehicle traveling region in the navigation data; and
obtaining, based on the lane sensing data and the navigation data, a probability that the vehicle transfers from the current lane to each of N lanes, wherein N is a positive integer, and the N lanes are determined from the lane sensing data;
determining a transfer path of the vehicle based on the probability that the vehicle transfers from the current lane to each of the N lanes; and
obtaining the lane change decision based on the transfer path.

9. The method according to claim 8, wherein the obtaining, based on the lane sensing data and the navigation data, the probability that the vehicle transfers from the current lane to each of the N lanes comprises:
using the map data and the lane sensing data as inputs for a classification network, and dividing the map into a plurality of regions by using the classification network, wherein the plurality of regions comprise a high confidence region, and the high confidence region comprises a region whose confidence is higher than a preset value;
extending the map based on the high confidence region, to obtain an extended map; and
obtaining, based on the extended map and the navigation path, the probability that the vehicle transfers from the current lane to each of the N lanes.

10. The method according to claim 8 or 9, wherein the generating the navigation guidance based on the lane change decision comprises:
if the lane change decision is lane change traveling, generating the navigation guidance based on the transfer path; or
if the lane change decision is lane keeping traveling, keeping, as the navigation guidance, a generated guidance line indicating lane keeping.

11. The method according to any one of claims 1 to 10, wherein a process of obtaining the lane sensing data comprises:
obtaining data collected by a sensor in the vehicle, to obtain scene data; and
performing sensing based on the scene data, to obtain the lane sensing data.

12. The method according to claim 11, wherein the sensor of the vehicle comprises one or more of the following:
an image sensor, a radar, an infrared sensor, or a depth sensor.

13. The method according to any one of claims 1 to 12, wherein a head-up display HUD or a display is further disposed in the vehicle, and displaying the navigation guidance comprises:
displaying the navigation guidance by using the HUD, wherein a display position of the navigation guidance matches the environment; or
displaying, on the display, a scene image of the environment in which the vehicle is located, and superimposing and displaying the navigation guidance on a lane in the scene image.

14. A navigation apparatus, comprising:
an obtaining module, configured to obtain navigation data and lane sensing data, wherein the navigation data comprises a navigation path of the vehicle during traveling, and the lane sensing data comprises information about at least one lane that is determined based on information collected in an environment in which the vehicle is located;
a processing module, configured to generate navigation guidance based on the navigation data and the lane sensing data; and
a display module, configured to display the navigation guidance, wherein the navigation guidance is used to identify a drivable lane corresponding to the navigation path in the environment, and the drivable lane comprises a traveling path that is of the vehicle and that is obtained based on the lane sensing data.

15. The apparatus according to claim 14, wherein the processing module is specifically configured to:
use map data and historical motion information of the vehicle as inputs for a prediction model, and output a predicted path of the vehicle, wherein the prediction model is configured to output the traveling path of the vehicle based on the input data, the historical motion information comprises information generated when the vehicle moves in a historical time period, and the map data comprises data of a map of the vehicle traveling region in the navigation data; and
generate the navigation guidance based on the predicted path, the navigation path, and the lane sensing data.

16. The apparatus according to claim 15, wherein the processing module is specifically configured to:
if the navigation path comprises a path on which the vehicle changes a lane for traveling, obtain a first path and a second path based on the navigation path and the predicted path, wherein the first path is a path on which the vehicle enters a target lane from a current lane, the second path comprises a traveling path planned for the vehicle after the vehicle travels to the target lane, and the target lane is one of the at least one lane;
determine a plurality of trajectory points based on the predicted path, the first path, and the second path, wherein the plurality of trajectory points comprise a curve entry trajectory point and a curve exit trajectory point, the curve entry trajectory point comprises a point determined based on the first path, and the curve exit trajectory point comprises a point determined based on the second path; and
generate the navigation guidance based on the plurality of trajectory points.

17. The apparatus according to claim 16, wherein the processing module is specifically configured to:
fit the plurality of trajectory points, to generate a turning guidance curve, wherein the turning guidance curve indicates a lane on which the vehicle travels in the environment; and
generate the navigation guidance based on the turning guidance curve.

18. The apparatus according to claim 17, wherein when the vehicle turns, the processing module is specifically configured to:
obtain a polyline point set, wherein the polyline point set comprises a current position of the vehicle, a point on an untraveled path in the predicted path, and a polyline formed between trajectory points that are in the plurality of trajectory points and that are not reached by the vehicle; and
fit the polyline point set, to generate the turning guidance curve.

19. The apparatus according to claim 17 or 18, wherein the processing module is specifically configured to:
when the vehicle travels to the curve entry point, fit trajectory points on the first path, to generate the turning guidance direction, wherein the turning guidance line points to the curve exit trajectory point; and
when the vehicle travels to the curve exit point, fit trajectory points in the second path, to generate the turning guidance direction, wherein the turning guidance line is a curve pointing from the vehicle to an end of the predicted path.

20. The apparatus according to any one of claims 14 to 19, wherein the processing module is specifically configured to:
determine a lane change decision of the vehicle based on the navigation data and the lane sensing data, wherein the lane change decision indicates whether the vehicle changes a lane; and
generate the navigation guidance based on the lane change decision.

21. The apparatus according to claim 20, wherein the processing module is specifically configured to:
determine, based on the map data and the lane sensing data, a lane on which the vehicle currently travels, wherein the map data comprises the data of the map of the vehicle traveling region in the navigation data;
obtain, based on the lane sensing data and the navigation data, a probability that the vehicle transfers from the current lane to each of N lanes, wherein N is a positive integer, and the N lanes are determined from the lane sensing data;
determine a transfer path of the vehicle based on the probability that the vehicle transfers from the current lane to each of the N lanes; and
obtain the lane change decision based on the transfer path.

22. The apparatus according to claim 21, wherein the processing module is specifically configured to:
use the map data and the lane sensing data as inputs for a classification network, and divide the map into a plurality of regions by using the classification network, wherein the plurality of regions comprise a high confidence region, and the high confidence region comprises a region whose confidence is higher than a preset value;
extend the map based on the high confidence region, to obtain an extended map; and
obtain, based on the extended map and the navigation path, the probability that the vehicle transfers from the current lane to each of the N lanes.

23. The apparatus according to claim 19 or 20, wherein the processing module is specifically configured to:
if the lane change decision is lane change traveling, generate the navigation guidance based on the transfer path; or
if the lane change decision is lane keeping traveling, keep, as the navigation guidance, a generated guidance line indicating lane keeping.

24. The apparatus according to any one of claims 14 to 23, wherein the processing module is specifically configured to:
obtain data collected by a sensor in the vehicle, to obtain scene data; and
perform sensing based on the scene data, to obtain the lane sensing data.

25. The apparatus according to claim 24, wherein the sensor of the vehicle comprises one or more of the following:
an image sensor, a radar, an infrared sensor, or a depth sensor.

26. The apparatus according to any one of claims 14 to 25, wherein a head-up display HUD or a display is further disposed in the vehicle, and the display module is specifically configured to:
display the navigation guidance by using the HUD, wherein a display position of the navigation guidance matches the environment; or
display, on the display, a scene image of the environment in which the vehicle is located, and superimpose and display the navigation guidance on a lane in the scene image.

27. An electronic device, comprising a processor, wherein the processor is coupled to a memory, the memory stores a program, and when program instructions stored in the memory are executed by the processor, the method according to any one of claims 1 to 13 is implemented.

28. A vehicle, comprising an electronic device and at least one display apparatus, wherein the electronic device is configured to implement the method according to any one of claims 1 to 13, and the at least one display is configured to display data under triggering of the electronic device.

29. The vehicle according to claim 28, wherein the at least one display apparatus comprises a head-up display HUD or a display.

30. A computer-readable storage medium, comprising a program, wherein when the program is executed by a processing unit, the method according to any one of claims 1 to 13 is performed.

31. A computer program product, comprising a computer program or instructions, wherein when the computer program or the instructions is/are executed by a processor, the method according to any one of claims 1 to 13 is implemented.
